(19) Europäisches Patentamt
European Patent Office
Office européen des brevets

(11) **EP 3 650 186 B1**

(12) **EUROPÄISCHE PATENTSCHRIFT**

(45) Veröffentlichungstag und Bekanntmachung des Hinweises auf die Patenterteilung:
**19.07.2023   Patentblatt 2023/29**

(21) Anmeldenummer: **18205205.0**

(22) Anmeldetag: **08.11.2018**

(51) Internationale Patentklassifikation (IPC):
*B29B 9/16* (2006.01)      *B29B 9/12* (2006.01)
*B29B 7/00* (2006.01)      *B29B 7/74* (2006.01)
*B29B 7/88* (2006.01)      *C08G 63/88* (2006.01)
*C08G 69/06* (2006.01)      *F26B 17/00* (2006.01)
*C08J 3/12* (2006.01)      *B29B 9/06* (2006.01)

(52) Gemeinsame Patentklassifikation (CPC):
**B29B 9/16; B29B 7/007; B29B 7/748; B29B 7/88;
B29B 9/065; B29B 9/12; C08G 63/88; C08G 69/06;
C08J 3/12; F26B 17/00;** B29B 2009/165

(54) **VERFAHREN UND VORRICHTUNG ZUR DIREKTKRISTALLISATION VON POLYKONDENSATEN**

METHOD AND DEVICE FOR DIRECT CRYSTALLISATION OF POLYCONDENSATES

PROCÉDÉ ET DISPOSITIF DE CRISTALLISATION DIRECTE DE POLYCONDENSATS

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**13.05.2020   Patentblatt 2020/20**

(73) Patentinhaber: **Polymetrix AG**
**9245 Oberbüren (CH)**

(72) Erfinder:
• **Christel, Andreas**
**9524 Zuzwil (CH)**

• **Müller, Martin**
**9240 Uzwil (CH)**

(74) Vertreter: **Hepp Wenger Ryffel AG**
**Friedtalweg 5**
**9500 Wil (CH)**

(56) Entgegenhaltungen:
EP-A1- 2 712 881      EP-A1- 3 363 841
WO-A1-99/18404      WO-A1-2008/071278
CN-A- 108 453 931      DE-A1- 4 300 913
US-A- 4 197 660      US-A1- 2006 047 103

## Beschreibung

Die vorliegende Erfindung betrifft ein Verfahren und eine Vorrichtung zur Direktkristallisation von Polykondensaten, insbesondere von Polyestern wie Polyethylenterephthalat (PET).

Die Herstellung bestimmter hochmolekularer Polymere, insbesondere von Polykondensaten wie Polyestern, ist über eine Schmelzpolykondensation oft nicht möglich, da wegen der damit einhergehenden zu hohen thermischen Belastung ein Produktabbau und eine inakzeptable Verunreinigung mit Nebenprodukten auftreten. Aus diesem Grund werden über eine Schmelzpolykondensation Prepolymere mit einem geringeren Molekulargewicht hergestellt. Die Prepolymere werden anschliessend in einer Festphasennachkondensation (SSP) auf das gewünschte Molekulargewicht angehoben. Diese Vorgehensweise ist aus dem Stand der Technik bekannt (z.B. Scheirs/ Long (Hrsg.), Modern Polyesters, Wiley 2003, Kapitel 4, S. 143 ff.).

Für die SSP-Reaktion wird das aus der Schmelzpolykondensation erhaltene Prepolymer zu Granulat verarbeitet. Um ein Verkleben des Granulats unter den Bedingungen der SSP-Reaktion zu verhindern, wird das Granulat vor der SSP-Reaktion teilkristallisiert. Auch dies ist aus dem Stand der Technik bekannt (z.B. Scheirs/ Long (Hrsg.), Modern Polyesters, Wiley 2003, Kapitel 4, S. 158-164).

Lässt sich das hochmolekulare Polykondensat mittels Schmelzpolykondensation herstellen, kann anschliessend trotzdem eine teilweise Kristallisation notwendig sein, um weitere Verarbeitungsschritte, wie eine Devolatilisierung, zu ermöglichen.

Üblicherweise wird das Polykondensat oder Polykondensat-Prepolymer nach seiner Formung zu Granulat abgekühlt und für die Kristallisation wieder aufgeheizt. Es sind aber aus dem Stand der Technik auch Verfahren bekannt, bei denen das Granulat direkt nach seiner Bildung in heissem Zustand ohne zwischenzeitliche Abkühlung der Kristallisationsstufe zugeführt wird. Derartige Verfahren werden als Direktkristallisation bezeichnet. In der DE 103 49 016 und der DE 10 2004 015 515 sind beispielsweise sogenannte Latentwärmekristallisationsverfahren beschrieben, bei welchem die Kristallisation ausschliesslich unter Ausnutzung der Eigenwärme des Granulats erfolgt.

In der WO 2006/128408 ist ein Verfahren zur Teilkristallisation von Polyesterpellets beschrieben, bei denen die Pellets (nach Herstellung durch Unterwassergranulation und Trocknung) mit einer Granulattemperatur von grösser als 100°C ohne Zuführung externer Energie bzw. Wärme mittels der in den Granulaten vorhandenen Eigenwärme in einem wenigstens leicht geneigt ausgerichteten Kristallisationsreaktor teilkristallisiert werden.

In der DE 10 2007 040 135 A1 ist ein Verfahren zur Herstellung von Polyester-Granulat unter Bedingungen beschrieben, welche eine anschliessende Hydrolyse des Polyesters möglichst gering halten. Es wird beschrieben, dass unter diesen Bedingungen ohne Zuführung externer Energie bzw. Wärme eine erste Kristallisation auf <10% eintritt, welche eine Agglomeration des Polyester-Granulats verhindern und somit eine weitere Kristallisation z.B. auf einer Schwingrinne zur Vermeidung von Agglomeration überflüssig machen soll.

Diese Verfahren haben aber den Nachteil, dass sie die Anforderungen an eine flexibel einstellbare und homogene Austrittsqualität bezüglich Temperatur und Kristallisationsgrad nicht erfüllen können. Weiterhin nachteilig ist, dass sich im Anfangsbereich der Kristallisationszone häufig Agglomerate bilden, die sich nicht immer vollständig auflösen.

Bessere Ergebnisse lassen sich erzielen, wenn die Kristallisation der noch heissen Granulate unter zusätzlichem Erhitzen mittels eines heissen Prozessgases erfolgt. Dies ist beispielsweise in der US-3,544,525 allgemein vorgeschlagen, ohne dass diesem Dokument Einzelheiten zur Verfahrensführung entnehmbar sind. Wie nachstehend ausgeführt ist dieses Verfahren mit mehreren Nachteilen behaftet.

In der WO 2008/071023 ist ein Verfahren beschrieben, bei welchem noch heisses Granulat in einem Granulattrockner vom Kühlmedium getrennt und anschliessend in einen Kristallisator überführt wird, wo es unter bestimmten Bedingungen behandelt wird. Sowohl Granulattrockner als auch Kristallisator werden hierbei unter Luftatmosphäre betrieben. Verdampftes Kühlmedium kann mit Hilfe von Luft entfernt werden. Die Strömungsgeschwindigkeit des Behandlungsgases im Kristallisator muss über dem Lockerungspunkt des Polykondensats liegen, und die Polykondensatgranulate müssen im Kristallisator ein enges Verweilzeitspektrum aufweisen, um ein homogen kristallisiertes Polykondensatgranulat zu erhalten. Zum Erhalt eines engen Verweilzeitspektrums muss zumindest in Teilen des Kristallisators eine starke Verwirbelung vermieden werden. Diese spezifischen Verfahrensbedingungen sind einschränkend und daher nachteilig.

Nicht immer kann jedoch unter Luftatmosphäre kristallisiert werden, da es bei den hohen Kristallisationstemperaturen zu oxidativem Abbau kommen kann. Bei bestimmten Materialien beziehungsweise bestimmten Qualitätsanforderungen muss daher unter Inertgasatmosphäre kristallisiert werden.

In der vorstehend bereits erwähnten US-3,544,525 ist ein Verfahren beschrieben, bei welchem Polymerschmelze mittels einer Unterwassergranulation in ein Prepolymer-Granulat geformt wird. Das Granulat wird anschliessend in einer Entwässerungseinheit (Granulattrockner) getrocknet und in eine Kristallisationsapparatur überführt, wo es mit heissem Inertgas kristallisiert wird.

Dieses Verfahren weist verschiedene Nachteile auf. Neben einer nicht zufriedenstellenden Kontrolle und Homogenität der Kristallisation kommt es aufgrund der Ausgestaltung des Granulattrockners als geschlossenes System in diesem durch die verdampfende Kühlflüssigkeit (Wasser) zu einem Überdruck. Als Konsequenz wird das Wasser aus dem Granulattrockner in den Kristallisator gedrückt und in den sich anschliessenden SSP-Reaktor eingetragen. Obwohl das Prepolymer in der US-3,544,525 nach Durchlaufen des Granulattrockners als relativ trocken beschrieben wird, liegt im SSP-Reaktor dennoch ein hoher Feuchtigkeitsgehalt vor, welcher vom Prozessgas aufgenommen wird, das den SSP-Reaktor durchströmt. Vor der Rückführung des Prozessgases in den SSP-Reaktor muss dieses in zusätzlichen Einheiten (Kondensator und Trockner) aufwendig vom Wasser befreit werden. Alternativ kann das feuchte Prozessgas entsorgt und durch frisches trockenes Prozessgas ersetzt werden. Diese Variante ist kostspielig und daher nicht zufriedenstellend. Zudem führt der hohe Feuchtigkeitsgehalt im SSP-Reaktor zu einer Abkühlung des Granulats, da das Wasser am Granulat anhaftet und abgedampft werden muss. Es wird daher im SSP-Reaktor mehr Prozessgas zum Erreichen der gewünschten Reaktionstemperatur benötigt, was ökonomisch nachteilig ist.

In der EP-3 363 841 A1 ist Verfahren zur kontinuierlichen Herstellung eines teilkristallinen Polykondensatgranulats beschrieben, bei welchem die Kristallisation eines durch Unterwassergranulation hergestellten Polykondensatgranulats nach Abkühlen auf eine mittlere Granulat-Temperatur innerhalb des Kristallisationstemperaturbereiches des Polykondensates in einem Kristallisator unter Wirbelbettbedingungen mittels einer spezifischen Energiezufuhr von aussen erfolgt. Da sich Wirbelbettbedingungen nur unter hohem apparativen und energetischen Aufwand erreichen lassen, ist der sinnvolle Einsatzbereich dieses Verfahrens aus wirtschaftlichen Gründen beschränkt.

In der DE 43 00 913 A1 ist eine Wärmebehandlung von Polyestern beschränkt, nämlich ein Vorerhitzen vor einer SSP-Behandlung unter Festbettbedingungen. Eine Kristallisation unter Festbettbedingungen ist nicht beschrieben.

Es war die Aufgabe der vorliegenden Erfindung, ein Verfahren und eine Vorrichtung zur Direktkristallisation von Polykondensat bereitzustellen, welche nicht die Nachteile aus dem Stand der Technik aufweisen und gegenüber dem Stand der Technik eine Vereinfachung der Verfahrensführung und erforderlichen Apparatur darstellen.

Es wurde erfindungsgemäss überraschend gefunden, dass die Nachteile aus dem Stand der Technik überwunden werden können, wenn die Kristallisation unter einer spezifischen Energiezufuhr von aussen unter Festbettbedingungen erfolgt. Dadurch kann überraschend auf einen separaten Kristallisator verzichtet werden. Stattdessen kann die Kristallisation in einer üblicherweise in SSP-Anlagen bereits vorhandenen Festbetteinheit wie einem Vorerhitzer durchgeführt werden. Dadurch kann auf einen separaten Schritt der Kristallisation und einer hierfür erforderlichen Baueinheit verzichtet werden, mit entsprechenden ökonomischen Vorteilen einer einfacheren und schnelleren Verfahrensführung und einer apparativen Vereinfachung.

Die vorliegende Erfindung betrifft ein Verfahren nach Anspruch 1 zur kontinuierlichen Herstellung eines teilkristallinen Granulats aus Polyethylenterephthalat-Homopolymer oder -Copolymer, umfassend die Schritte:

a) Formen einer Schmelze aus Polyethylenterephthalat-Homopolymer oder -Copolymer zu Granulat unter Zugabe eines flüssigen Kühlmediums, und Abkühlen auf eine mittlere Granulat-Temperatur innerhalb des Kristallisationstemperaturbereiches des Polyethylenterephthalat-Homopolymers oder -Copolymers, wobei das Abkühlen vor oder während oder nach dem Formen zu Granulat erfolgt;
b) Abtrennen des flüssigen Kühlmediums vom Granulat in einem ersten Behandlungsraum, wobei das Granulat nach Austritt aus dem ersten Behandlungsraum eine Temperatur $T_{GR}$ und einen Kristallisationsgrad von weniger als 10% aufweist;
c) Kristallisieren des Granulats in einem zweiten Behandlungsraum,

dadurch gekennzeichnet, dass im zweiten Behandlungsraum die Bedingungen eines Festbetts vorliegen und das Granulat im zweiten Behandlungsraum durch Energiezufuhr von aussen mittels eines Prozessgases erhitzt wird, wobei das Prozessgas eine Temperatur $T_{Gas}$ aufweist, die grösser ist als die Summe der Granulattemperatur $T_{GR}$ und der durch freigesetzte Kristallisationswärme im zweiten Behandlungsraum auftretenden Temperaturerhöhung $T_{KR}$, d.h. $T_{Gas} > (T_{GR} + T_{KR})$, und wobei das Granulat am Austritt aus dem zweiten Behandlungsraum eine mittlere Temperatur $T_{PH}$ aufweist, die um 10 bis 90°C grösser ist als die Summe der Granulattemperatur $T_{GR}$ und der durch freigesetzte Kristallisationswärme im zweiten Behandlungsraum auftretenden Temperaturerhöhung $T_{KR}$, d.h. $(T_{GR} + T_{KR} + 90°C) \geq T_{PH} \geq (T_{GR} + T_{KR} + 10°C)$, wobei die Behandlung im zweiten Behandlungsraum in mehreren Stufen erfolgt, wobei eine Stufe jeweils ein Paar an Zuführeinrichtungen und Wegführeinrichtungen die in einem zugehörigen Sammelraum münden, umfasst und jede Stufe mit einem Verhältnis X der Massenströme von Gas ($m_G$) und Granulat ($m_P$) ($X = m_G/m_P$) von kleiner als 1, besonders bevorzugt kleiner als 0.5 durchgeführt wird.

Teilkristalline Granulate aus Polyethylenterephthalat-Homopolymer oder -Copolymer bezeichnen dabei Granulate aus Polyethylenterephthalat-Homopolymer oder -Copolymer, die sowohl amorphe Zonen wie auch Zonen mit kristalliner Struktur aufweisen.

Die vorliegende Erfindung betrifft weiterhin eine Vorrichtung nach Anspruch 10 zur Durchführung des vorstehend beschriebenen Verfahrens, umfassend

- eine Granulationsvorrichtung mit einer Leitung zur Zuführung eines Kühlmediums und einer Leitung zur Wegführung eines Granulat/Kühlmedium Gemisches,

- eine stromabwärts von der Granulationsvorrichtung angeordnete Trennvorrichtung, welche einen ersten Behandlungsraum bereitstellt,
- und einer stromabwärts von der Trennvorrichtung ohne dazwischen befindlicher Kristallisationseinheit angeordneten Einheit, welche einen zweiten Behandlungsraum bereitstellt und mit jeweils einem Einlass und Auslass für das Granulat ausgestattet ist,

dadurch gekennzeichnet, dass der zweite Behandlungsraum mit zumindest zwei Zuführeinrichtungen und zumindest zwei Wegführeinrichtungen für Prozessgas verbunden ist, so dass im zweiten Behandlungsraum das Gas unter Bedingungen eines Festbetts durch das Granulat geführt werden kann und die Behandlung im zweiten Behandlungsraum in mehreren Stufen erfolgen kann, wobei eine Stufe jeweils ein Paar an Zuführeinrichtungen und Wegführeinrichtungen umfasst.

Erfindungsgemäss soll unter dem Begriff "ohne dazwischen befindlicher Kristallisationseinheit" verstanden werden, dass zwischen der Trennvorrichtung und der stromabwärts davon angeordneten Einheit keine Einheit bereitgestellt ist, in welcher ein Anstieg des Kristallisationsgrades der Polykondensatgranulate bewusst und um mindestens 5% bewirkt wird. Einheiten mit anderem Zweck und in denen aufgrund der darin herrschenden Bedingungen lediglich unbeabsichtigt eine geringfügige Anhebung des Kristallisationsgrades um höchstens 5% bewirkt wird, wie beispielsweise ein Klassiersieb oder eine rohrförmige Verbindungsleitung, sind keine Kristallisationseinheiten.

Die vorliegende Erfindung ist zur Behandlung von kristallisierbaren Polykondensaten, nämlich Granulaten aus Polyethylenterephthalat-Homopolymer oder -Copolymer vorgesehen, die durch eine Polykondensationsreaktion unter Abspaltung eines niedermolekularen Reaktionsproduktes gewonnen werden. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polykondensate eines Polymertyps werden jeweils aus den gleichen Hauptmonomeren gewonnen. Eine begrenzte Menge weiterer Monomere, sogenannter Comonomere, kann dabei zum Einsatz kommen.

Polyester sind Polymere, welche üblicherweise durch Polykondensation aus einer Diol-Komponente mit der allgemeinen Struktur HO-R1-OH und einer Dicarbonsäure-Komponente mit der allgemeinen Struktur HOOC-R2-COOH gewonnen werden, wobei R1 und R2 üblicherweise gegebenenfalls substituierte, lineare oder verzweigte aliphatische Kohlenwasserstoffe mit 1 bis 15 Kohlenstoffatomen, aromatische oder heteroaromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind.

Üblicherweise werden lineare oder zyklische Diol-Komponenten und aromatische oder heterozyklische Dicarbonsäure-Komponenten verwendet Anstelle der Dicarbonsäure kann auch ihr entsprechender Diester, üblicherweise Dimethylester eingesetzt werden.

Typische Beispiele der Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Gemäss der vorliegenden Erfindung ist der Polyester Polyethyleneterephthalat, das aus seinen Monomeren, einer Diol-Komponente und einer Dicarbonsäure-Komponente, gewonnen wird, wobei die Diol-Komponente als Hauptmonomer aus Ethylenglykol (1,2- Ethandiol) und die Dicarbonsäure-Komponente als Hauptmonomer aus Terephthalsäure besteht. Als Comonomere kommen weitere lineare, cyclische oder aromatische Diol- und Dicarbonsäureverbindungen in Frage. Typische Comonomere sind Diethylenglykol (DEG), Isophthalsäure (IPA) oder 1,4-Bishydroxymethyl-cyclohexan (CHDM).

Polyester können auch durch Biosynthese durch Mikroorganismen oder in pflanzlichen Zellen hergestellt werden, woraus sie durch Aufschluss der Zelle gewonnen werden.

Bei den geeigneten Polykondensaten kann es sich um kristallisierbare Homopolymere handeln. Trotz der Bezeichnung Homopolymer kann sich im Herstellprozess ein geringer Anteil an Comonomeren bilden. So ist bei der Herstellung von Polyethyleneterephthalat die Bildung von Diethyleneglykol aus Ethylenglykol bekannt. Viele geeignete Polykondensate sind jedoch kristallisierbare Copolymere, die einen gewissen Anteil an Comonomer enthalten. Die Comonomere können als Teil der Monomere in den Herstellprozess des Polykondensates eingeführt werden oder sie bilden sich als Teil des Herstellprozesses, wodurch sich üblicherweise eine zufällige Verteilung ergibt. Die Comonomere können auch als Blöcken, hergestellt aus unterschiedlichen Monomeren, eingefügt werden, woraus sich sogenannte Blockcopolymere ergeben.

Typische Mengen eines oder mehrerer Comonomere reichen von 1% bis zu ungefähr 30% w/w. Durch die Tatsache, dass in vielen Fällen ein übergrosser Anteil an Comonomer die Kristallisation gänzlich verhindert, kann der maximal Gehalt an Comonomer auf unter 20% w/w, bevorzugt unter 10% w/w beschränkt sein.

Nach der Polymerisation hat jede Polykondensatkette kettenbeendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Eine Polyamidkette kann eine oder mehrere Hydroxyl- und/ oder Aminendgruppen haben. Solche Endgruppen können durch ein sogenanntes Endcapping-Reagens modifiziert sein, oder sie können durch eine Abbaureaktion modifiziert sein. Obwohl dies bei den obenstehenden allgemeinen Strukturen nicht spezifisch erwähnt ist, können geeignete Polymere derartige modifizierte Endgruppen haben.

Bei dem Polykondensat kann es sich um ein Neumaterial oder um ein Recyclat handeln. Als Recyclate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polykondensat können Additive zugegeben werden. Als Additive eignen sich zum Beispiel Katalysatoren, Farbstoffe und Pigmente, UV-Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Der erfindungsgemässen Granulationsvorrichtung zum Formen eines Polykondensatgranulats wird eine Polykondensatschmelze als Ausgangsmaterial zugeführt. Die Herstellung einer Polykondensatschmelze erfolgt mittels im Stand der Technik bekannter Apparaten oder Reaktoren (z.B. Scheirs/Long (Hrsg.), Modern Polyesters, Wiley 2003, insbesondere S-31-104). Grundsätzlich kommen Polymerisationsreaktoren in Frage, in denen Polykondensate in flüssiger Phase hergestellt werden, wie zum Beispiel Rührkessel, Käfigreaktoren oder Scheibenreaktoren, oder aber Apparaturen, in denen zuvor hergestellte Polykondensate aufgeschmolzen werden, wie zum Beispiel Extruder oder Kneter. Die Polykondensatschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten (d.h. Teilchen definierter Form und Grösse) aus den Polykondensatsträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl an einzelnen Granulaten aufgetrennt, wobei das Auftrennen vor oder nach dem Verfestigen erfolgen kann. Das Auftrennen erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polykondensatschmelze erfolgt durch Kühlen mit Hilfe mindestens eines flüssigen Kühlmediums oder einer Kombination verschiedener flüssiger Kühlmedien. Als flüssiges Kühlmedium sind insbesondere Flüssigkeiten geeignet, die eine hohe spezifische Wärmekapazität, bevorzugt grösser als 2 kJ/(kg-K) und einen ausreichend hohen Siedepunkt, bevorzugt grösser als 90°C aufweisen, sowie das Polykondensat nicht wesentlich angreifen oder verändern und keine toxischen Rückstände im Polykondensat hinterlassen. Erfindungsgemäss bevorzugt wird ein einziges flüssiges Kühlmedium verwendet. Bevorzugt sind Wasser oder Ethylenglykol oder deren Gemische. Besonders bevorzugt ist Wasser als Kühlmedium.

Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält. Trotz der Verwendung des Begriffs "Wasser" in der Bezeichnung der Granulationseinrichtungen können auch andere flüssige Medien verwendet werden. Das Abkühlen kann erfindungsgemäss vor, während oder nach dem Formen des Materials zu Granulat erfolgen.

Üblicherweise hat das flüssige Kühlmedium bei Eintritt in die Granulationsvorrichtung eine Temperatur, welche mehr als 50°C beträgt, aber mindestens 10°C unterhalb seines Siedepunktes liegt. Im Fall von Wasser beträgt die Temperatur des Kühlmediums gemäss dieser Ausführungsform bei Normaldruck daher 50°C bis 90°C. Durch die Druckabhängigkeit des Siedepunktes erhöht sich die geeignete Temperatur des flüssigen Kühlmediums bei erhöhtem Druck im Flüssigkeitssystem. Bei tieferem Druck reduziert sich die geeignete Temperatur, was unter anderem auch bei offenen Systemen mit tiefem Aussendruck der Fall ist.

Bevorzugt weist das flüssige Kühlmedium, vorzugsweise Wasser, abhängig vom Tg des zu formenden Polykondensats, entsprechend eine Temperatur von weniger als 85°C, besonders bevorzugt von zwischen 50°C und 80°C, insbesondere bevorzugt von zwischen 60°C und 75°C auf.

Gemäss einer erfindungsgemäss bevorzugten Ausführungsform hat das flüssige Kühlmedium bei Eintritt in die Granulationsvorrichtung eine Temperatur, welche unterhalb der Glasübergangstemperatur (auch Glasübergangspunkt genannt, mit Tg abgekürzt) des zu formenden Polykondensats liegt. Bei Polyestern beginnt das Granulat oberhalb der Glasübergangstemperatur des Materials zu verkleben, d.h. die Teilchen haften unter Bildung von Agglomeraten aneinander. Die Glasübergangstemperatur von Polyethylenterephthalat liegt beispielsweise bei etwa 75°C bis 82°C (abhängig vom Comonomergehalt und der Art der zugesetzten Comonomere).

Die Glasübergangstemperatur eines Polykondensats kann mit Hilfe einer DSC (Digital scanning calorimetry)-Messung ermittelt werden. DSC ist ein herkömmliches, dem Fachmann hinlänglich bekanntes Verfahren. Vorrichtungen für DSC-Messungen sind ebenfalls hinlänglich bekannt und käuflich erhältlich. Beispielhaft sei das Gerät Mettler DSC821 genannt. Zur Messung der Glasüberganstemperatur eines Polykondensats wie eines Polyesters können beispielsweise 5-25 mg einer entsprechenden Polymerprobe in einem Mettler DSC821-Messgerät mit einer Rate von 10°C/min von 25°C auf 290°C erhitzt werden. Die Probe wird 1 min bei 290°C gehalten, dann rasch auf Raumtemperatur abgekühlt und ein zweites Mal mit einer Rate von 10°C/min von 25°C auf 290°C erhitzt. Der Glasübergangspunkt (Tg) wird aus diesem zweiten Durchgang ermittelt. Als Tg wird der Wendepunkt des entsprechenden Signals im DSC herangezogen.

Die derart hergestellten Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0 541 674 vorgeschlagen ist, aufweisen. Die mittlere Granulatgrösse soll zwischen 0.1 mm und 10 mm, bevorzugterweise zwischen 0.5 mm und 3.5 mm und besonders bevorzugt zwischen 0.85 mm und 3 mm liegen.

Als mittlere Granulatgrösse gilt der statistische Mittelwert des mittleren Granulatdurchmessers, der sich aus dem Durchschnitt aus Granulathöhe, -länge und -breite (mit bekannten Methoden messbar) ergibt. Die Granulatgrössenverteilung soll in einem engen Spektrum gehalten werden. Bevorzugt ist die Standardabweichung der Granulatgewichte von 100 gemessenen Granulaten zwischen 2 und 20%.

Gemäss der vorliegenden Erfindung wird das hergestellte Granulat einer Direktkristallisation unterzogen, d.h. das Granulat wird nicht derart stark abgekühlt (z.B. auf Raumtemperatur), dass es für eine nachfolgende Kristallisation mit grossem Energieaufwand erhitzt werden muss. Gemäss der vorliegenden Erfindung wird das Granulat auf eine mittlere Granulat-Temperatur abgekühlt, die innerhalb des Kristallisationstemperaturbereiches des Polykondensates liegt. Dies wird erreicht, indem die Temperatur des Kühlmediums wie vorstehend beschrieben gewählt und die Verweilzeit des Granulats im Kühlmedium entsprechend kurz gewählt wird. Erfindungsgemäss bevorzugt erfolgt das Abtrennen des Kühlmediums vom Granulat innerhalb von 0,1 bis 5 Sekunden, besonders bevorzugt innerhalb von 0,3 bis 3 Sekunden nach Zugabe des Kühlmediums. Gleichzeitig mit dem Abkühlen können die Polykondensatgranulate zu einem weiteren Prozessschritt gefördert werden.

Die mittlere Granulat-Temperatur bezeichnet dabei den Mittelwert der Temperaturen der einzelnen Granulate, wobei jedes Granulat eine mittlere Temperatur aufweist, die sich ergibt, wenn sich das Temperaturprofil im Granulat, ohne Wärmeaustauch nach aussen, ausgleicht.

Der geeignete Kristallisationstemperaturbereich wird ersichtlich, wenn die Kristallisationshalbwertszeit (t½) als Funktion der Temperatur aufgezeichnet wird. Er ist nach oben und unten begrenzt durch die Temperatur, bei der die Kristallisationshalbwertszeit das ungefähr 10-Fache der minimalen Kristallisationshalbwertszeit (t½ min) erreicht. Da sehr kurze Kristallisationshalbwertszeiten (t½) nur schwer bestimmbar sind, wird als Minimalwert t½ min = 1 Minute eingesetzt. Zum Beispiel liegt der geeignete Kristallisationstemperaturbereich bei Polyethylenterephthalat zwischen 110 und 220 °C, bei Polyethylenfuranoat zwischen 110 und 190°C und bei Poly-L-lactid zwischen 80 und 140°C.

Die Kristallisationshalbwertszeit (t½) wird mittels isothermer Kristallisation mittels DSC (differential scanning calorimetry) bestimmt. Die Kristallisationshalbwertszeit entspricht der Zeit, die bei der gegebenen Temperatur benötigt wird, um 50% der erreichbaren Kristallinität zu erreichen. Die minimale Kristallisationshalbwertszeit (t½ min) ist die kürzeste Kristallisationshalbwertszeit die im Kristallisationstemperaturbereich erhalten wird.

Bevorzugt, im Fall von Polyethylenterephthalat (PET) als zu behandelndem Polymer, erfolgt eine Abkühlung des Granulats auf eine Temperatur im Bereich von 110 bis 180 °C, vorzugsweise auf zwischen 115 °C und 160 °C und besonders bevorzugt von 120 °C bis 150 °C.

Nach dem Abkühlen wird das Kühlmedium von den Granulaten getrennt und somit getrocknet. Optional erfolgt eine weitere Behandlung (Konditionierung) der Granulate in einem flüssigen Medium, wofür direkt das Kühlmedium oder eine andere Flüssigkeit verwendet werden kann.

Das Trennen der Granulate von einem flüssigen Kühlmedium erfolgt in einem ersten Behandlungsraum mittels im Stand der Technik bekannter Trennvorrichtungen als Trocknungsvorrichtung. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aktive Trennvorrichtungen zumindest für einen Teil der Trennung verwendet, wobei die Trennung zum Beispiel aufgrund einer Gasdurchströmung, einer Zentrifugalkraft, eines Aufpralls, einer Verdampfung oder Kombinationen daraus erfolgen kann. Solche Vorrichtungen sind zum Beispiel als Absaugvorrichtungen, Pralltrockner oder Zentrifugaltrockner bekannt. Das Abtrennen kann durch die Zufuhr eines Gasflusses in die Trennvorrichtung unterstützt werden, wobei der Gasfluss optional erwärmtes oder getrocknetes Gas, insbesondere Luft umfasst. Ein Zentrifugaltrockner mit Luftzufuhr ist bevorzugt.

Für die Abtrennung vom Kühlmedium wird das Granulat aus einer vorstehend beschriebenen Einheit zum Formen des Granulats über eine Verbindungsleitung in eine Einheit zum Abtrennen des Kühlmediums überführt. Die Überführung des Granulats in die Trennvorrichtung erfolgt mit einer derartigen Geschwindigkeit, dass es nicht zu einer Abkühlung des Granulats unter dessen Kristallisationstemperaturbereich kommt. Die Fliessgeschwindigkeit des Granulats in der Verbindungsleitung kann durch Zufuhr von Luft oder einem anderen geeigneten Gas in die Verbindungsleitung erhöht werden.

Zur beschleunigten Verdampfung von flüssigem Kühlmedium wird an den ersten Behandlungsraum bevorzugt eine Temperatur im Bereich von 100 bis 200°C, vorzugsweise von 110 °C bis 160 °C und besonders bevorzugt von 120 bis 150 °C angelegt. Das Granulat verweilt im ersten Behandlungsraum vorzugsweise für einen Zeitraum von einer Zehntelsekunde bis zu 10 Sekunden.

Erfindungsgemäss bevorzugt weist das Granulat nach Austritt aus dem ersten Behandlungsraum eine Temperatur $T_{GR}$ im Bereich von 100-180°C, vorzugsweise von 120 °C bis 160°C auf.

Die Trennvorrichtung weist mindestens eine Eintragsöffnung für die Zufuhr des Granulats in die Einheit auf. Bei der Eintragsöffnung kann es sich zum Beispiel um eine Öffnung im Gehäuse oder um den Austritt aus einem Rohr, das in das Gehäuse geführt wird, handeln. Weiterhin weist die Trennvorrichtung mindestens eine Austragsöffnung für die Wegfuhr des Granulats aus der Einheit auf. Bei der Austragsöffnung kann es sich zum Beispiel um eine Öffnung im Gehäuse oder um den Eintritt in ein Rohr, das aus dem Gehäuse heraus geführt wird, handeln. Weiterhin weist die Trennvorrichtung mindestens eine Austragsöffnung für die Wegfuhr des flüssigen Kühlmediums aus der Einheit auf.

Im ersten Behandlungsraum liegt eine Gasphase vor, welche das verdampfende Kühlmedium aufnimmt. Bevorzugt handelt es sich bei dem Gas um Luft. Es können aber auch andere Gase oder Gasgemische mit einem niedrigeren Sauerstoffgehalt als Luft verwendet werden.

Die Trennvorrichtung ist vorzugsweise keine abgeschlossene Einheit. Die Trennvorrichtung weist vorzugsweise mindestens eine Austrittsöffnung zur Abfuhr von Gas, vorzugsweise Luft, auf. Bevorzugt mündet die Austrittsöffnung der Trennvorrichtung in eine Gasabfuhrleitung, in welcher ein Ventilator zur Luftzirkulation durch die Trennvorrichtung angeordnet ist. Optional ist die Austrittsöffnung mit einem Kondensator zur Rückgewinnung von flüssigem Kühlmedium aus dem abgeführten Gas verbunden.

Die Trennvorrichtung kann weiterhin mindestens eine Eintrittsöffnung zur Einleitung von Gas, vorzugsweise Luft, aufweisen. Die Eintrittsöffnung ist in diesem Fall bevorzugt am entgegen gesetzten Ende des ersten Behandlungsraums zur Austrittsöffnung angeordnet, um ein vollständiges Durchströmen des ersten Behandlungsraums mit Gas zu gewährleisten. Es ist aber auch möglich, dass die Eintrittsöffnung zur Einleitung von Gas nicht in der Trennvorrichtung angeordnet ist, sondern in einer nachfolgenden Einheit oder einer Verbindungsleitung zu einer nachfolgenden Einheit.

Gemäss einer Ausführungsform wird das Gas über einen Ansaugfilter der Eintrittsöffnung zugeführt. In der zur Eintrittsöffnung führenden Gasleitung kann ein Ventilator zur Luftzirkulation durch die Trennvorrichtung angeordnet sein. Dieser Ventilator kann zusätzlich zum Ventilator in der Gasabfuhrleitung vorgesehen sein oder an dessen Stelle treten.

Die zur Eintrittsöffnung führende Leitung und die von der Austrittsöffnung abgehende Leitung können miteinander untere Ausbildung eines geschlossenen Kreislaufs verbunden sein. Bei dieser Ausführungsform muss das Gas vor Wiedereintritt in den ersten Behandlungsraum aber durch einen Kondensator geführt werden, um das im Gas befindliche verdampfte Kühlmedium abzutrennen.

Die erfindungsgemässe Vorrichtung weist vorzugsweise einen Kühlmedium-Kreislauf auf. Das Kühlmedium wird aus einem Vorratsbehälter (Tank) vorzugsweise über eine Umwälzpumpe und gegebenenfalls einen Wärmetauscher (zum wahlweisen Erhitzen oder Abkühlen des Kühlmediums) in die Formeinheit (Granulationsvorrichtung) geführt. Das in der Trennvorrichtung oder einem allfälligen Kondensator abgetrennte Kühlmedium kann über eine Rohrleitung zurück in den Vorratsbehälter geführt werden.

Nach dem Abtrennen der Polykondensatgranulate vom flüssigen Kühlmedium erfolgt ein Übertrag in die nachfolgende Einheit, welche einen zweiten Behandlungsraum umfasst. Vorzugsweise wird dies mit Hilfe einer Verbindungsleitung erreicht, welche zwischen Trennvorrichtung und nachfolgender Einheit angeordnet ist und die Austragsöffnung der Trennvorrichtung mit der Eintragsöffnung der nachfolgenden Einheit verbindet. Die Verbindungsleitung ist bevorzugt derart ausgestaltet, dass ein ungehinderter Durchtritt der zu behandelnden Polykondensatgranulate von der vorgeschalteten Einheit zur nachfolgenden Einheit gewährleistet ist.

Optional ist zwischen Trennvorrichtung und nachfolgender Einheit ein Sieb angeordnet, durch das einzelne Granulate mit spezifikationsgemässer Grösse ungehindert durchtreten können, das jedoch Granulatagglomerate und zu grosse Granulate zurück hält. Optional ist zwischen Trennvorrichtung und nachfolgender Einheit eine Absperreinheit, vorzugsweise eine Schleuseneinheit, wie zum Beispiel eine Zellradschleuse angeordnet. Mehrere Trennvorrichtungen können mit einer nachfolgenden Einheit verbunden sein.

Um im Fall einer Störung des Kristallisationsprozesses ein aufwendiges und kostspieliges Entsorgen von Material zu vermeiden, kann die erfindungsgemässe Verbindungsleitung wie in der WO 2008/071278 beschrieben mit einem Zwischenspeicher verbunden sein, in welchen das Material durch eine Steuerungsvorrichtung im Störungsfall geleitet und dort unter Bedingungen (insbesondere Absenkung der Granulat-Temperatur unterhalb seines Glasübergangspunktes) gelagert wird, bei denen eine Agglomeration des Granulats nicht auftritt.

Alternativ ist die Trennvorrichtung derart mit der nachfolgenden Einheit verbunden, dass ein direkter Übertrag der Granulate aus der Trennvorrichtung in die nachfolgende Einheit erfolgen kann.

Beim Eintritt in die nachfolgende Einheit ist das zu behandelnde Granulat in der Regel im Wesentlichen amorph, d.h. es weist einen Kristallisationsgrad von weniger als 10%, vorzugsweise weniger als 5% auf. Erfindungsgemäss bevorzugt weist das Granulat im Fall von Polyethylenterephthalat (PET) vor Eintritt in die nachfolgende Einheit einen IV-Wert von 0.4 bis 0.8 dl/g, insbesondere 0.5 bis 0.67 dl/g auf. Der IV-Wert gibt die intrinsische Viskosität eines Polymers an und ist ein Mass für dessen Molekulargewicht. Der IV-Wert und seine Bestimmung sind aus dem Stand der Technik bekannt. Die intrinsische Viskosität (IV) wird erfindungsgemäss nach folgender Vorschrift bestimmt: Zur Messung der Lösungsviskosität wird eine Mischung aus Phenol/Dichlorbenzol (50 : 50 Gew.%) als Lösungsmittel benutzt. Die Polyesterprobe wird während 10 Minuten bei 130°C mit einer Konzentration von 0.5% (0.5g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt. Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4K_H(R.V. - 1)} - 1}{2 * c * K_H} \quad (dl/g)$$

Mit den obigen Messmethoden (Polymerkonzentration C=0,5.g/dl und der Huggins Konstante $K_H$=0.35) wird die Gleichung:

$$I.V. = \frac{\sqrt{1 + 1.4(R.V. - 1)} - 1}{0.35} \quad (dl/g)$$

Die Viskosität des Polyesters kann entweder als intrinsische Viskosität (IV) oder als mittleres Molekulargewicht (Zahlenmittel: Mn) angegeben sein. Zur Umrechnung eines IV-Wertes gemessen in Phenol:Dichlormethan = 1:1 in das mittlere Molekulargewicht wird die Gleichung

$$IV = k \cdot Mn^a$$

verwendet, wobei $k = 2.1 \cdot 10^{-4}$ und $a = 0.82$ ist.

Diese Gleichung ist allgemein auf publizierte Daten anwendbar, wenn nicht explizit ein anderes Lösemittelgemisch und die dazu gehörenden Umrechnungsfaktoren gegeben sind.

Erfindungsgemäss bevorzugt durchfliessen die Polykondensatgranulate den zweiten Behandlungsraum im Wesentlichen von oben nach unten, während der zweite Behandlungsraum im Gegenstrom oder alternativ im Kreuzstrom oder einer Kombination von Gegenstrom und Kreuzstrom von einem Prozessgas durchströmt wird.

Als Prozessgase können zum Beispiel Luft, Wasserdampf oder Inertgase wie Stickstoff, Edelgase wie Argon, oder $CO_2$ zum Einsatz kommen. Das Prozessgas kann ein Gemisch mehrerer Prozessgase umfassen. Das Prozessgas kann Additive enthalten, die entweder reaktiv auf das zu behandelnde Polykondensat einwirken, eine Quellwirkung auf das Polykondensat haben oder sich passiv auf den zu behandelnden Polykondensatgranulaten ablagern. Der Sauerstoffgehalt des Prozessgases soll weniger als 0,1 Gew.-%, vorzugsweise weniger als 0,05 Gew.-% und besonders bevorzugt weniger als 0,02 Gew.-% betragen.

In der erfindungsgemässen nachfolgenden Einheit liegen die Polykondensatgranulate im zweiten Behandlungsraum als Festbett vor, welches das im kontinuierlichen Betrieb bewegte Festbett umfasst.

Obwohl die Einheit mit zweitem Behandlungsraum grundsätzlich eine beliebige Einheit sein kann, in welcher eine Granulatbehandlung unter Festbettbedingungen durchgeführt wird, werden die erfindungsgemässen Vorteile insbesondere dadurch realisiert, dass eine üblicherweise in einer SSP-Anlage bereits vorhandene entsprechende Einheit für diesen Zweck eingesetzt wird. Erfindungsgemäss bevorzugt ist daher die Einheit mit zweitem Behandlungsraum ein Vorerhitzer. Derartige Einheiten sind hinlänglich bekannt und beispielsweise in der DE 43 00 913 A1 und der WO 99/18404 A1 beschrieben.

Mit anderen Worten kann das erfindungsgemässe Verfahren mit jeder Einheit durchgeführt werden, in welche die erfindungsgemässen Bedingungen eingestellt werden können. Die gesamten Vorteile der vorliegenden Erfindung werden jedoch bei Verwendung einer nachstehend im Detail beschriebenen und beanspruchten erfindungsgemässen Vorrichtung erreicht.

Erfindungsgemäss bevorzugt ist der zweite Behandlungsraum unterhalb des ersten Behandlungsraums angeordnet.

Der zweite Behandlungsraum ist von einem Gehäuse umgeben. Der horizontale Querschnitt des Behandlungsraumes kann eine beliebige Form aufweisen, ist bevorzugterweise aber rund oder rechteckig. Der Behandlungsraum ist bevorzugt im Wesentlichen beziehungsweise bevorzugt genau vertikal angeordnet, so dass das Granulat die Vorrichtung von oben nach unten durchfliessen kann. Wichtig ist dabei, dass ein gleichmässiger Produktfluss erreicht werden kann. Der zweite Behandlungsraum ist seitlich durch einen Mantel begrenzt. Die Mantelwand kann dabei aus zylindrischen, konischen oder aus einer Kombination aus konischen und zylindrischen Segmenten bestehen, wodurch sich die Gasgeschwindigkeitsverteilung über die Höhe der Vorrichtung beeinflussen lässt. Eine Verengung im Deckenbereich erlaubt eine Erhöhung der Gasgeschwindigkeit, was zu einer lokalen Verwirbelung führt, wodurch sich eine verbesserte Produktverteilung erreichen lässt.

Eine besondere Ausführungsform der vorliegenden Erfindung sieht einen wenigstens annähernd rotationssymmetrischen Gehäusemantel vor, was fertigungstechnische Vorteile sowie Vorteile für einen regelmässigen Produktfluss ergibt.

Im Innern des zweiten Behandlungsraumes können Verdrängungskörper angeordnet sein, die nicht vom Granulat durchflossen werden und somit den zweiten Behandlungsraum verkleinern. Solche Verdrängungskörper können zum Beispiel zur Durchführung von Prozessgas, zur Anpassung der freien Querschnittsfläche oder zur Verbesserung des Granulatflusses eingesetzt werden.

Im Innern des zweiten Behandlungsraumes können Trennwände angeordnet sein, die den zweiten Behandlungsraum in zwei oder mehrere Kammern unterteilen. Die Kammern können durch Durchlassöffnungen für die Granulate miteinander verbunden sein.

Bevorzugt mündet zumindest eine Eintragsöffnung in den Deckenbereich des zweiten Behandlungsraumes und ermöglicht das Einführen des zu behandelnden Granulats in den zweiten Behandlungsraum. Bei der Eintragsöffnung kann es sich zum Beispiel um eine Öffnung im Gehäuse oder um den Austritt aus einem Rohr, das in das Gehäuse geführt wird, handeln. Die Eintragsöffnung kann in mehrere Segmente unterteilt sein, was eine Verteilung der Granulate im Behandlungsraum erlaubt.

Bevorzugt mündet zumindest eine Austragsöffnung in den unteren Teil des zweiten Behandlungsraumes, durch die behandeltes Granulat aus dem Behandlungsraum ausgetragen werden kann. Bei der Austragsöffnung kann es sich zum Beispiel um eine Öffnung im Gehäuse oder um den Eintritt in ein Rohr, das aus dem Gehäuse heraus geführt wird, handeln. Üblicherweise wird das Granulat durch einen konischen Bereich der Austragsöffnung zugeführt. Der Winkel des Auslaufkonus beträgt zur Horizontalen bevorzugterweise 50 - 80°, wenn das Granulat im Austragskonus nicht fluidisiert oder vibriert wird, und 15-60°, insbesondere 30-50°, wenn das Granulat im Austragskonus fluidisiert oder vibriert wird. Alternativ kann das Granulat auch mittels einer mechanischen Austragsvorrichtung, wie zum Beispiel einer Schnecke, der Austragsöffnung zugeführt werden.

Unterhalb der Austragsöffnung befindet sich erfindungsgemäss bevorzugt eine Absperreinheit, vorzugsweise eine Schleuseneinheit, wie zum Beispiel eine Zellradschleuse, oder eine Walzeneinheit mit deren Hilfe der Granulatabfluss aus dem zweiten Behandlungsraum geregelt wird. Als Regelgrösse kann dabei zum Beispiel die Füllhöhe des Granulates im zweiten Behandlungsraum oder das Gewicht der Granulate in der den zweiten Behandlungsraum umfassenden Einheit dienen.

Zum zweiten Behandlungsraum der erfindungsgemässen Vorrichtung führen zumindest zwei Zuführeinrichtungen und zumindest zwei Wegführeinrichtungen für ein Prozessgas. Jede Zuführeinrichtung weist zumindest eine Eintrittsöffnung auf, durch die Prozessgas in den zweiten Behandlungsraum strömt. Jede Wegführeinrichtung weist zumindest eine Austrittsöffnung auf, durch die Prozessgas aus dem zweiten Behandlungsraum strömt.

Die Zuführeinrichtung für ein Prozessgas kann Vorrichtungen mit mindestens einer Eintrittsöffnung, wie zum Beispiel nach unten offene Kegel, Dächer oder Dachreihen sowie Leitungen oder Bleche mit Austrittsbohrungen, oder auch Spaltbleche sowie Siebe oder Gitter umfassen, durch die Prozessgas in den zweiten Behandlungsraum fliesst. Die Wegführeinrichtung für das Prozessgas kann Vorrichtungen mit mindestens einer Austrittsöffnung, wie zum Beispiel nach unten offene Kegel, Dächer oder Dachreihen sowie Leitungen oder Bleche mit Austrittsbohrungen oder auch Spaltbleche sowie Siebe oder Gitter umfassen, durch die Prozessgas aus dem zweiten Behandlungsraum abfliesst.

Die Zuführeinrichtungen können sich dabei unabhängig voneinander im Mantel oder im Bodenbereich des Behandlungsraumes befinden. Die Wegführeinrichtungen können sich dabei unabhängig voneinander im Mantel oder im Deckenbereich des Behandlungsraumes befinden.

Eine besondere Ausführungsform sieht vor, dass eine Wegführeinrichtung für das Prozessgas in die Eintragsöffnung der Polykondensatgranulate integriert ist.

Eine besondere Ausführungsform sieht vor, dass der zweite Behandlungsraum nach unten teilweise durch eine gasdurchlässige Absperreinrichtung, insbesondere ein Lochblech mit einer Vielzahl an Eintrittsöffnungen, begrenzt wird, die von Prozessgas zumindest stellenweise, nicht aber von den Granulaten durchströmt werden kann. Dazu sind die Öffnungen kleiner als der Durchmesser der Granulate. Die Durchlassfläche weist bevorzugterweise zwischen 1% und 30% auf. Bevorzugt sind Öffnungen zwischen 20 und 90%, insbesondere zwischen 30 und 80% des Durchmessers der Granulate. Die Anzahl, Grösse und Anordnung der Öffnungen kann dabei gleichmässig oder ungleichmässig sein. Die Absperreinrichtung ist konisch oder schräg nach unten angeordnet, wobei die für den Auslaufkonus beschriebenen Winkel auch hier Gültigkeit haben.

Vor den Zuführeinrichtungen kann sich ein Verteilraum befinden, durch den Prozessgas zu den Zuführeinrichtungen geführt wird. In diesen Verteilraum mündet zumindest eine Zuführöffnung für Prozessgas. Nach den Wegführeinrichtungen kann sich ein Sammelraum befinden, in dem Prozessgas aus den Wegführeinrichtungen gesammelt wird. In diesen Sammelraum mündet zumindest eine Wegführöffnung für Prozessgas. Weiterhin können Vorrichtungen zur Verteilung des Prozessgases, wie Staubleche, Ventile oder Klappen, wie auch getrennte Kanäle zur individuellen Prozessgaszufuhr und -Wegfuhr angeordnet sein. In oder unterhalb der Wegführeinrichtung können sich Vorrichtungen befinden, die den Durchtritt von Prozessgas erlauben, den Durchtritt von Granulaten aber behindern. Dies kann zum Beispiel durch einen gebogenen oder umgelenkten Durchflusskanal oder mit Hilfe von ablenkenden Einbauten, wie zum Beispiel einem Zick-Zack-Abscheider, erfolgen.

Eine bevorzugte Ausführungsform der vorliegenden Erfindung sieht vor, dass sich im zweiten Behandlungsraum auf einer Ebene eine Vielzahl von dächerförmigen oder rohrförmigen Zuführeinrichtungen befindet, in die aus einem Verteilraum kommendes Prozessgas fliesst, und sich oberhalb dieser Ebene auf einer weiteren Ebene eine Vielzahl von dächerförmigen oder rohrförmigen Wegführeinrichtungen befindet, durch die Prozessgas in einen Sammelraum fliesst, wobei das Prozessgas von der unteren Ebene zur oberen Ebene strömt und dabei das Schüttgut, das den zweiten Behandlungsraum von oben nach unten durchfliesst, im Gegenstrom durchströmt.

Die Zuführeinrichtungen und die Wegführeinrichtungen sind dazu derart angeordnet, dass ein direkter Gasfluss vom Verteilraum zum Sammelraum vermieden wird.

Werden dächerförmige Zuführeinrichtungen verwendet, können diese derart angeordnet werden, dass die Spitzen der Dächer im Wesentlichen nach oben gerichtet und so dem Fluss der Polymergranulate entgegengesetzt angeordnet sind, und das Gas nach unten austreten kann. Werden dächerförmige oder rohrförmige Zuführeinrichtungen verwendet, können diese derart angeordnet werden, dass die Spitzen der Dächer im Wesentlichen nach oben gerichtet und so dem Fluss der Polymergranulate entgegengesetzt angeordnet sind, und das Gas durch nach oben gerichtete Eintrittsöffnungen austreten kann. Dazu müssen die entsprechenden Eintrittsöffnungen kleiner sein als der mittlere Granulatdurchmesser. Lochgrösse und Lochfläche gelten dabei wie für die gasdurchlässige Absperreinrichtung, die den zweiten Behandlungsraum nach unten begrenzen kann.

Werden dächerförmige Wegführeinrichtungen verwendet, werden diese derart angeordnet, dass die Spitzen der Dächer im Wesentlichen nach oben gerichtet und so dem Fluss der Polymergranulate entgegengesetzt angeordnet sind, und das Gas von unten eintreten kann. Um einen möglichst gleichmässigen Fluss der Polymergranulate an den dächerförmigen Einrichtungen vorbei zu gewährleisten, sollen diese eine Dachsteilheit im Vergleich zur Horizontalen von 50° bis 80° aufweisen. Unabhängig von der Form der Einrichtungen sollen horizontale Flächen oder Flächen mit einer Steilheit von weniger als 45°, auf denen sich Granulate ablagern können, vermieden werden, wobei die maximale Breite der zulässigen horizontalen Flächen 50% des mittleren Durchmessers der Granulate nicht überschreiten soll.

Eine weitere bevorzugte Ausführungsform der vorliegenden Erfindung sieht vor, dass sich in einer Mantelfläche im zweiten Behandlungsraum eine Zuführeinrichtung und in einer weiteren Mantelfläche im zweiten Behandlungsraum eine Wegführeinrichtung für Prozessgas befindet, wobei die beiden Mantelflächen im Wesentlichen gegenüberliegend angeordnet sind und dazwischen einen im Wesentlichen rechteckigen Durchflusskanal für die zu behandelnden Polykondensatgranulate bilden.

Gemäss der Vorrichtung der vorliegenden Erfindung ist vorgesehen, dass zusätzlich zur zumindest einen Zuführeinrichtung und Wegführeinrichtung für Prozessgas zumindest eine weitere Zuführeinrichtung und Wegführeinrichtung für Prozessgas in den zweiten Behandlungsraum mündet. Die zumindest eine weitere Zuführeinrichtung und Wegführeinrichtung soll derart angeordnet sein, dass die Polykondensatgranulate nach Durchlaufen eines Bereiches des zweiten Behandlungsraumes, in dem es einem Gasfluss aus der zumindest einen Zuführeinrichtung ausgesetzt war, dem Gasfluss aus der zumindest einen zusätzlichen Zuführeinrichtung ausgesetzt wird. Insbesondere ist die zusätzliche Zuführeinrichtung und Wegführeinrichtung unterhalb der zumindest einen Zuführeinrichtung angeordnet, wodurch sich eine mehrstufige Wärmezufuhr sowie ein mehrstufiges Gasgeschwindigkeitsprofil erreichen lässt.

Das Granulat wird im zweiten Behandlungsraum durch Energiezufuhr von aussen mit Hilfe des heissen Prozessgases erhitzt. Hierbei wird das Prozessgas mit einer Temperatur $T_{Gas}$ in den zweiten Behandlungsraum geführt, die grösser ist als die Summe der Granulattemperatur $T_{GR}$ und der durch freigesetzte Kristallisationswärme im zweiten Behandlungsraum auftretenden Temperaturerhöhung $T_{KR}$, d.h. $T_{Gas} > (T_{GR} + T_{KR})$. Die Gastemperatur $T_{Gas}$ liegt also über der mittleren Granulattemperatur, welche die Polykondensatgranulate ohne Energiezufuhr von aussen im zweiten Behandlungsraum erreichen würden, woraus sich der Vorteil ergibt, dass sich die Polykondensatgranulate auf eine konstante und definierte Austrittstemperatur einstellen lassen. Es hat sich erfindungsgemäss gezeigt, dass zum Erhalt eines homogen kristallisierten Polykondensats die Energiezufuhr von aussen unter Berücksichtigung der durch freigesetzte Kristallisationswärme im zweiten Behandlungsraum auftretenden Temperaturerhöhung $T_{KR}$ zu erfolgen hat.

Die durch freigesetzte Kristallisationswärme im zweiten Behandlungsraum auftretende Temperaturerhöhung $T_{KR}$ lässt sich auf bekannte Weise berechnen ($q = m \cdot c \cdot \Delta T$, wobei q die Kristallisationswärme des Polykondensats, m die Masse und c die spezifische Wärmekapazität des Polykondensats sind und q und c aus einschlägigen Handbüchern entnommen werden können).

Durch die Zunahme der Kristallinität wird Kristallisationswärme freigesetzt. Aufgrund dieser Kristallisationswärme erfolgt eine Temperaturerhöhung $T_{KR}$, die sich wie vorstehend ausgeführt aus der freigesetzten Wärmemenge geteilt durch die spezifische Wärmekapazität und die Masse des Polykondensates ergibt.

Im Allgemeinen liegt die durch freigesetzte Kristallisationswärme im zweiten Behandlungsraum auftretende Temperaturerhöhung $T_{KR}$ im Bereich von 5°C bis 40°C. Insbesondere im Fall von Polyethylenterephthalat (PET) liegt $T_{KR}$ im Bereich von 10°C bis 30°C, wobei als Standardwert für PET mit einem Comonomergehalt von 3 bis 7% w/w ein Wert von 20°C eingesetzt werden kann, wenn keine konkreten Messwerte vorliegen.

Gemäss einer bevorzugen Ausführungsform der vorliegenden Erfindung wird das Verhältnis X der Massenströme von Gas ($m_G$) und Granulat ($m_P$) (X = $m_G/m_P$) im zweiten Behandlungsraum so eingestellt, dass 4°C $\leq$ ($T_{Gas}$ - $T_{KR}$ - $T_{GR}$) * X $\leq$ 400°C, vorzugsweise 15°C < ($T_{Gas}$ - $T_{KR}$ - $T_{GR}$) * X $\leq$ 300°C, bevorzugter 15°C < ($T_{Gas}$ - $T_{KR}$ - $T_{GR}$) * X $\leq$ 250°C, besonders bevorzugt 90°C < ($T_{Gas}$ - $T_{KR}$ - $T_{GR}$) * X $\leq$ 300°C, und insbesondere bevorzugt 90°C < ($T_{Gas}$ - $T_{KR}$ - $T_{GR}$) * X $\leq$ 250°C ist. Damit wird ein Polykondensat mit besonders vorteilhaften Eigenschaften hinsichtlich homogener Kristallisation und weiterer Verarbeitung mittels SSP Reaktion erhalten.

Erfindungsgemäss bevorzugt erfolgt die Auswahl der Gaseintrittstemperatur $T_{Gas}$ und dem Verhältnis X von Gasmenge zu Produktmenge derart, dass ein Aufheizen der Polykondensatgranulate am Austritt aus dem zweiten Behandlungsraum auf eine Temperatur $T_{PH}$ erfolgt, die um 10 bis 90°C grösser ist als die Summe der Granulattemperatur $T_{GR}$ und der durch freigesetzte Kristallisationswärme im zweiten Behandlungsraum auftretenden Temperaturerhöhung $T_{KR}$, d.h. ($T_{GR}$ + $T_{KR}$ + 90°C) $\geq$ $T_{PH}$ $\geq$ ($T_{GR}$ + $T_{KR}$ + 10°C), wobei das Aufheizen bevorzugt auf ($T_{GR}$ + $T_{KR}$ + 90°C) $\geq$ $T_{PH}$ $\geq$ ($T_{GR}$ + $T_{KR}$ + 15°C) und besonders bevorzugt auf ($T_{GR}$ + $T_{KR}$ + 90°C) $\geq$ $T_{PH}$ $\geq$ ($T_{GR}$ + $T_{KR}$ + 20°C) erfolgt.

Erfindungsgemäss wird die Behandlung im zweiten Behandlungsraum in mehreren Stufen, vorzugsweise 2 bis 200 Stufen, besonders bevorzugt 2 bis 100 Stufen, erfolgen, wobei eine Stufe jeweils ein Paar an Zuführeinrichtungen und Wegführeinrichtungen umfasst. Mehrere Zuführeinrichtungen einer Stufe können von einem Verteilraum ausgehen. Mehrere Wegführeinrichtungen einer Stufe können von einem Sammelraum ausgehen. Hierbei wird jede Stufe mit einem Verhältnis X der Massenströme von Gas ($m_G$) und Granulat ($m_P$) (X = $m_G/m_P$) von kleiner als 1, besonders bevorzugt kleiner als 0.5 durchgeführt.

Das Granulat wird erfindungsgemäss bevorzugt im zweiten Behandlungsraum auf eine Temperatur erhitzt, die 20°C oder mehr unter dem Schmelzpunkt des Polykondensates liegt. Im Fall von Polyethylenterephthalat (PET) wird das Granulat erfindungsgemäss bevorzugt im zweiten Behandlungsraum auf eine Temperatur im Bereich von 170 bis 240°C, insbesondere bevorzugt auf 180°C bis 225°C erhitzt.

Optional ist der Einheit mit dem zweiten Behandlungsraum ein weiterer Vorerhitzer nachgeschaltet. Auch in diesem Fall wird das Granulat auf die für eine nachfolgende SSP-Reaktion vorgesehene Temperatur erhitzt.

Die Verweilzeit der Polykondensatgranulate im zweiten Behandlungsraum beträgt 10 Minuten bis 5 Stunden, bevorzugt über 30 Minuten und bevorzugt unter 3 Stunden, wobei die Verweilzeit zumindest 5 Kristallisationshalbwertszeiten umfassen soll. Im Fall eines schnell kristallisierenden Polymers wie Polyethylenterephthalat (PET) mit einem Comonomergehalt von weniger als 7% w/w beträgt die Verweilzeit bevorzugt zwischen 30 Minuten und 3 Stunden. Langsam kristallisierende Polymere müssen entsprechend länger im zweiten Behandlungsraum verweilen, bis der gewünschte Anstieg des Kristallisationsgrades erreicht ist.

Da erhitzte Prozessgase teuer sind, wird erfindungsgemäss bevorzugt das eingesetzte Prozessgas zumindest teilweise in einem Kreislaufsystem geführt, wobei jeweils eine geringe Menge an Austauschgas zu- und weggeführt werden kann. Zwischen der Wegführeinrichtung und Zuführeinrichtung für das Prozessgas besteht gemäss dieser bevorzugten Ausführungsform ein im Wesentlichen geschlossener Kreislauf aus Rohrleitungen.

Im Kreislauf können sich weitere Einheiten, wie zum Beispiel Verdichtungseinrichtungen (z. B. Ventilatoren, Gebläse oder Kompressoren), Wärmetauscher (z.B. Erhitzer), Absperrvorrichtungen z.B. ein Ventil oder Hahn) oder Reinigungseinrichtungen (z. B. Filter, Zyklone, Wäscher oder katalytische Verbrennungseinrichtungen), befinden. Wird das Prozessgas dem zweiten Behandlungsraum in mehreren Stufen zugegeben, können sich zwischen den Stufen zusätzliche Einheiten befinden, ausgewählt aus der Gruppe bestehend aus Verdichtern wie Ventilatoren, Wärmetauschern wie Erhitzern, Abscheidern wie Filtern, oder Absperrvorrichtungen.

Gemäss einer bevorzugten Ausführungsform der vorliegenden Erfindung ist die Einheit mit dem zweiten Behandlungsraum, vorzugsweise durch eine Zuführleitung, mit einem Inertgastank verbunden. Durch die Zuführleitung kann Inertgas aus dem Inertgastank in das Kreislaufsystem aus Rohrleitungen oder direkt in die Einheit mit dem zweiten Behandlungsraum eingeführt werden. Vorzugsweise ist in dieser Zuführleitung eine Dosiereinheit, beispielsweise ein Regelventil, angeordnet, mit welcher die Zufuhr von Inertgas kontrolliert werden kann.

Gemäss einer bevorzugten Ausführungsform der vorliegenden Erfindung wird der Druck p2 im zweiten Behandlungsraum so eingestellt, dass er oberhalb des im ersten Behandlungsraum vorliegenden Druckes p1 liegt. Dadurch wird ein Übergehen von Kühlmedium aus dem ersten Behandlungsraum im Trockner in den zweiten Behandlungsraum verhindert. Aufgrund des höheren Drucks im zweiten Behandlungsraum geht hierbei Inertgas aus dem zweiten Behandlungsraum in den ersten Behandlungsraum über.

Beim Austritt aus dem zweiten Behandlungsraum weist das Granulat vorzugsweise einen Kristallisationsgrad auf, der grösser ist als 35% des maximal bei der Behandlungstemperatur im zweiten Behandlungsraum erreichbaren Kristallisationsgrades. Insbesondere bevorzugt weist das Granulat beim Austritt aus dem zweiten Behandlungsraum einen Kristallisationsgrad auf, der zwischen 40% und 80% des maximal bei der Kristallisationstemperatur erreichbaren Kristallisationsgrades liegt.

Gemäss einer bevorzugten Ausführung der vorliegenden Erfindung erfolgt gleichzeitig mit der Kristallisation ein Annealing der Polykondensatgranulate, wodurch ein allfälliger low melting-Peak auf eine Temperatur verschoben wird, die zumindest 10° über der Behandlungstemperatur im nachfolgend beschriebenen dritten Behandlungsraum liegt, und/oder wodurch ein allfälliger low melting-Peak auf einen Wert von unter 3J/g reduziert wird.

Der low melting-Peak kann mittels DSC (Digital scanning calorimetry)-Messung ermittelt werden. Zur Messung des low melting-Peak eines Polykondensats wie eines Polyesters können beispielsweise 5-25 mg einer entsprechenden Polymerprobe in einem Mettler DSC821-Messgerät mit einer Rate von 10°C/min von Raumtemperatur auf eine Temperatur über dem Schmelzpunkt des Polykondensates erhitzt werden. Als low melting-Peak wird die Spitze des endothermen Schmelzpeaks bezeichnet, der dem eigentlichen Schmelzpeak vorgelagert ist, wobei es zu einer Vermischung des low melting-Peaks und des Schmelzpeaks kommen kann, wenn sich der low melting-Peak auf der Flanke des Schmelzpeaks befindet. In diesem Fall kann der low melting Peak aus der ersten Ableitung der DSC-Kurve ermittelt werden, wobei das Zwischenminimum auf der Flanke als low melting-Peak gilt.

Im Fall von Polyethylenterephthalat (PET) weist das Granulat beim Austritt aus dem zweiten Behandlungsraum einen Kristallisationsgrad zwischen 20% und 50%, insbesondere zwischen 31% und 45% auf, und der low melting-Peak liegt im Bereich von 190 - 250°C, insbesondere im Bereich von 200 - 240°C.

Gemäss der vorliegenden Erfindung können die nach der Kristallisation erhaltenen Polykondensatgranulate einer weiteren thermischen Behandlungsstufe zugeführt werden, welche vorzugsweise aus der Gruppe bestehend aus einer Devolatilisierungsstufe, vorzugsweise Dealdehydisierungsstufe, und einer Festphasen-Nachkondensation (SSP) ausgewählt ist. Diese thermische Behandlungsstufe wird in einem dritten Behandlungsraum durchgeführt, welcher sich vorzugsweise in einem separaten Reaktor befindet.

Sowohl die Devolatliisierung, vorzugsweise Dealdehydisierung, als auch die SSP-Reaktion sind dem Fachmann bekannt und müssen an dieser Stelle nicht näher erläutert werden. Erfindungsgemäss bevorzugt wird diese thermische Behandlung in einem dritten Behandlungsraum in einer Gasphase aus Inertgas durchgeführt, wobei flüchtige Komponenten aus dem Polymer während der Behandlung verdampfen und in die Gasphase übergehen. Vorzugsweise wird Stickstoff als Inertgas verwendet. Erfindungsgemäss soll der Sauerstoffgehalt des Gases im dritten Behandlungsraum weniger als 0,1 Gew.-%, vorzugsweise weniger als 0,05 Gew.-% und besonders bevorzugt weniger als 0,02 Gew.-% betragen, um eine oxidative Beschädigung der Polykondensatgranulate zu verringern beziehungsweise auszuschliessen.

Aufgrund der hohen Temperatur des in den dritten Behandlungsraum eintretenden Polymers ist es nicht erforderlich, sehr heisses Prozessgas in den dritten Behandlungsraum einzuleiten. Aufgrund frei werdender Kristallisationswärme wird erfindungsgemäss im dritten Behandlungsraum im Fall von Polyethylenterephthalat (PET) in der Regel ein Temperaturanstieg von 2 bis 15 °C, vorzugsweise von 3 bis 15°C und besonders bevorzugt von 5 bis 15°C beobachtet. Gemäss der vorliegenden Erfindung kann daher in bestimmten Fällen in den dritten Behandlungsraum ein Prozessgas eingeleitet werden, dessen Temperatur unterhalb der Temperatur der im dritten Behandlungsraum vorliegenden Polykondensatgranulate liegt. Durch die vorliegende Erfindung kann eine sich anschliessende thermische Behandlungsstufe daher energieeffizient durchgeführt werden.

Im dritten Behandlungsraum wird das Prozessgas vorzugsweise im Gegenstrom zum Strom der Polymerpartikel geführt. Es können beliebige Reaktoren, die im Stand der Technik zur thermischen Behandlung von Schüttgütern bekannt sind, eingesetzt werden. Beispielsweise sei ein herkömmlicher Schachtreaktor erwähnt.

Die kristallisierten Polykondensatgranulate werden aus dem zweiten Behandlungsraum auf bekannte Art in den dritten Behandlungsraum überführt. Beispielsweise können die Granulate aus dem zweiten Behandlungsraum mittels einer pneumatischen Förderung in den dritten Behandlungsraum überführt werden. Hierbei kann je nach Geschwindigkeit der Förderung eine Abkühlung der Polykondensatgranulate um zwischen 2 und 15°C, vorzugsweise zwischen 3 und 15°C und besonders bevorzugt zwischen 5 und 15°C erfolgen. Falls erforderlich kann ein zusätzliches Erhitzen der Granulate vor Eintritt in den dritten Behandlungsraum auf bekannte Art durchgeführt werden.

Erfindungsgemäss kann die Dealdehydisierung von beispielsweise Polyethylenterephthalat im dritten Behandlungsraum bei einer Temperatur von 140 bis 200°C erfolgen. Es ist hierbei beispielsweise ein Temperaturanstieg im dritten Behandlungsraum von 3 bis 15°C zu beobachten.

Erfindungsgemäss kann die SSP-Reaktion von beispielsweise Polyethylenterephthalat im dritten Behandlungsraum bei einer Temperatur von 180 bis 240°C, vorzugsweise 180 bis 225°C erfolgen. Es ist hierbei beispielsweise ein Temperaturanstieg im dritten Behandlungsraum von 3 bis 15°C zu beobachten.

Die vorliegende Erfindung wird nachstehend anhand mehrerer Figuren näher erläutert. Es zeigen:

Fig. 1    eine schematische Darstellung einer bevorzugten Ausführungsform einer Vorrichtung gemäss der vorliegenden Erfindung.

Fig. 2    eine schematische Darstellung einer bevorzugten Ausführungsform einer nachgeschalteten Einheit mit zweitem Behandlungsraum gemäss der vorliegenden Erfindung, wobei das Prozessgas im Wesentlichen im Gegenstrom geführt wird.

Fig. 3    eine schematische Darstellung einer bevorzugten Ausführungsform einer nachgeschalteten Einheit mit zweitem Behandlungsraum gemäss der vorliegenden Erfindung, wobei das Prozessgas im Wesentlichen im Kreuzstrom geführt wird.

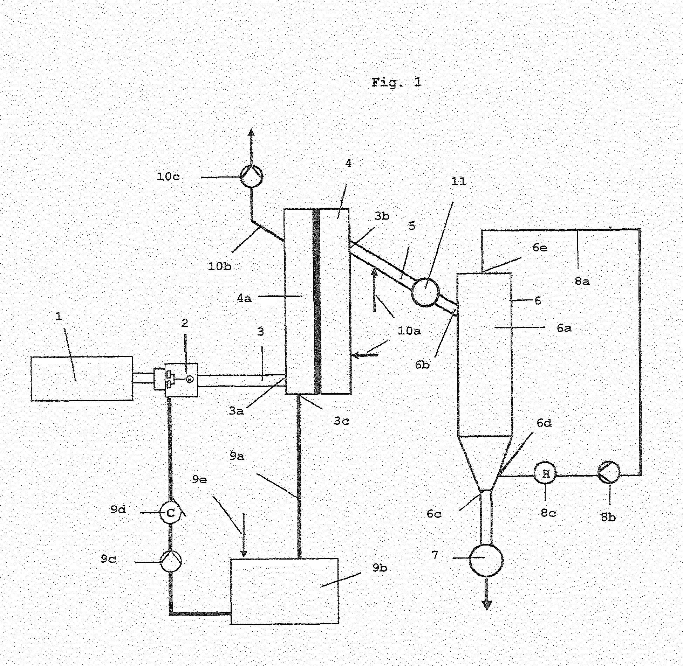

Die Vorrichtung gemäss Fig. 1 weist einen Reaktor 1 zur Herstellung einer Polymerschmelze auf. Es kann sich hierbei um einen Reaktor handeln, in welchem eine Schmelzpolymerisation durchgeführt und somit ein Prepolymer aus den Monomeren hergestellt wird. Wahlweise kann es sich bei dem Reaktor 1 auch um eine Vorrichtung zum Aufschmelzen eines festen Produkts, beispielsweise eines Prepolymer handeln. Beispielhaft kann der Reaktor 1 in diesem Fall ein Extruder sein.

Das geschmolzene Material wird in eine Granulationsvorrichtung 2 überführt. In der Granulationsvorrichtung 2 wird auf bekannte Weise ein Granulat aus dem geschmolzenen Material hergestellt. Beispielsweise kann es sich um einen Unterwassergranulator (wie in Fig. 1 gezeigt) handeln. Die Granulierung erfolgt in diesem Fall unter Wasser. Die erhaltenen Granulatpartikel werden im Granulator 2 gleichzeitig abgekühlt. Wie vorstehend ausgeführt darf die Abkühlung aber nicht so stark ausfallen, dass die Granulatpartikel unterhalb ihres Kristallisationstemperaturbereiches abgekühlt werden. Dies kann durch den Einsatz von erwärmtem Wasser, welches eine Temperatur über 50°C, aber zumindest 10°C unterhalb seines druckabhängigen Siedepunktes, insbesondere eine Temperatur unterhalb des Tg des Polykondensates, vorzugsweise eine Temperatur von 50 bis 80°C aufweist, erreicht werden. Das Granulat sollte im Fall von Polyethylenterephthalat (PET) auf eine Temperatur von 110 bis 180°C, vorzugsweise 115 to 160°C und besonders bevorzugt 120 bis 150°C, gekühlt werden.

Das Granulat wird über eine Verbindungsleitung 3 durch eine Eintragsöffnung 3a in die Einheit zum Trocknen des Granulats (Trennvorrichtung) 4 überführt.

Zur Vermeidung einer zu starken Abkühlung des Granulats sollte dieses so schnell wie möglich aus dem Granulator 2 und durch die Verbindungsleitung 3 geführt werden. Vorzugsweise kann die Fliessgeschwindigkeit in der Verbindungsleitung 3 durch Einleitung eines Gasstroms (vorzugsweise Luft) erhöht werden.

In der Einheit zum Trocknen des Granulats (Trennvorrichtung) 4 wird das Granulat in einem ersten Behandlungsraum 4a vom flüssigen Kühlmedium (Wasser) abgetrennt und getrocknet. Das abgetrennte Kühlmedium wird durch eine Austragsöffnung 3c über eine Rohrleitung 9a zurück in den Vorratsbehälter (Tank) 9b für das Kühlmedium geführt. Der Vorratsbehälter 9b weist einen Einlass 9e zur Zuführung von Kühlmedium auf. Vom Vorratsbehälter 9b wird das Kühlmedium mit Hilfe einer Umwälzvorrichtung (Pumpe) 9c in die Granulationsvorrichtung 2 überführt. Hierbei durchläuft das Kühlmedium vorzugsweise einen Wärmetauscher 9d. Im Wärmetauscher 9d kann das Kühlmedium nach Bedarf erwärmt oder abgekühlt werden. Insbesondere aus der Trennvorrichtung 4 zurückgeführtes Kühlmedium kann aufgrund des Kontakts mit heissem Granulat eine zu hohe Temperatur aufweisen und muss vor dem Eintritt in die Granulationsvorrichtung 2 gekühlt werden.

Das frische Kühlmedium, das über den Einlass 9e zugeführt wird, kann ein basisches Medium oder ein pH-Puffermedium enthalten. Insbesondere ist hier die Verwendung von Wasser mit einer in einem engen Bereich eingestellten Neutralisations- oder Pufferwirkung vorgesehen. Alternativ kann die Zugabe eines basischen Mediums oder eines pH-Puffermediums auch direkt in den Kühlkreislauf, z.B. in den Vorratstank 9b, erfolgen.

Die Trocknung des Granulats im ersten Behandlungsraum 4a in der Einheit 4 erfolgt neben einer mechanischen Trennvorrichtung mit Hilfe von Gas, vorzugsweise Luft oder einer im wesentlichen Luft umfassenden Gasatmosphäre, bei einer Temperatur von 100 bis 200°C, vorzugsweise 110 bis 160°C. In der Vorrichtung gemäss Fig. 1 wird die Luft durch eine Eintrittsöffnung 10a in die Trennvorrichtung 4 geführt. Die Eintrittsöffnung 10a für das Gas kann sich im Gehäuse der Trennvorrichtung 4 oder in der Verbindungsleitung 5 oder an beiden Orten befinden. Optional kann in der zur Eintrittsöffnung 10a führenden Gasleitung ein (nicht gezeigter) Ansaugfilter angeordnet sein. Die Luft verlässt die Trennvorrichtung 4 durch die Austrittsöffnung 10b. In der Vorrichtung gemäss Fig. 1 ist in der von der Austrittsöffnung 10b wegführenden Gasleitung 10c ein Ventilator 10d zur Zirkulation der Luft durch die Trennvorrichtung 4 angeordnet. Der Ventilator könnte jedoch alternativ auch in der Lufteinlassleitung 10a angeordnet sein. Weiterhin könnten Eintrittsöffnung 10a und Austrittsöffnung 10b miteinander unter Bildung eines Kreislaufsystems verbunden sein. In diesem Kreislaufsystem ist dann ein Kondensator bereitzustellen.

Das Granulat wird aus der Trennvorrichtung 4 durch eine Austragsöffnung 3b über eine Verbindungsleitung 5 via Zellradschleuse 11 durch eine Eintragsöffnung 6b in eine Einheit 6 mit einem zweiten Behandlungsraum 6a überführt. Das Granulat kann ungehindert von der Trennvorrichtung 4 in die Einheit 6 übergehen. In dieser Ausführungsform ist die Einheit 6 ein Vorerhitzer.

In der Einheit 6 wird das im Wesentlichen amorphe Granulat in einem zweiten Behandlungsraum 6a zumindest teilkristallisiert. Innerhalb des zweiten Behandlungsraums 6a werden die Granulatpartikel durch einen im Gegenstrom oder Kreuzstrom durch die Einheit 6 geleiteten Gasstrom wärmebehandelt. Innerhalb des zweiten Behandlungsraums 6a liegen die Bedingungen eines Festbetts vor.

Die Kristallisation der Partikel erfolgt durch Energiezufuhr von aussen, wobei zur Energiezufuhr von aussen ein Prozessgas im Gegenstrom zum Granulatstrom durch den zweiten Behandlungsraum 6a geführt wird, welches eine Temperatur $T_{Gas}$ aufweist, die grösser ist als die Summe der Granulattemperatur $T_{GR}$ und der durch freigesetzte Kristallisationswärme im zweiten Behandlungsraum 6a auftretenden Temperaturerhöhung $T_{KR}$, d.h. $T_{Gas} > (T_{GR} + T_{KR})$. Im Fall von Polyethylenterephthalat (PET) erfolgt die Kristallisation durch Aufheizen auf eine Temperatur $T_{PH}$ von 170 bis 235°C, wobei dazu Prozessgas mit einer Temperatur $T_{Gas}$ von 175 bis 240°C verwendet wird. Bei Temperaturen über 180°C wird bevorzugt ein Inertgas, im wesentlichen Stickstoff, als Prozessgas verwendet. Das kristallisierte Granulat verlässt die Einheit 6 durch eine Austragsöffnung 6c über eine Austragsvorrichtung 7, beispielsweise einer Absperreinheit wie einer Zellradschleuse.

Alternativ kann stromabwärts von der Zellradschleuse eine zweite Schleuseneinheit (wie eine Zellradschleuse) angeordnet sein.

Die Partikel können einer anschliessenden thermischen Behandlung wie einer Dealdehydisierung oder SSP-Reaktion zugeführt werden. Wahlweise können die Partikel auch einer Kühlstufe zugeführt werden.

Das in der Einheit 6 verwendete Prozessgas wird durch ein geschlossenes Kreislaufsystem aus Rohrleitungen 8a geführt. Das Prozessgas tritt in die Einheit 6 durch eine Eintrittsöffnung 6d ein und verlässt die Einheit 6 durch eine Austrittsöffnung 6e. Im Kreislaufsystem des Prozessgases befindet sich ein Ventilator 8b zur Zirkulation des Gases. Vor der Eintrittsöffnung 6d ist ein Wärmetauscher 8c bereitgestellt, um das Gas vor dem Eintritt in die Einheit 6 auf die gewünschte Temperatur zu bringen. Vorzugsweise wird das Gas im Wärmetauscher 8c erhitzt.

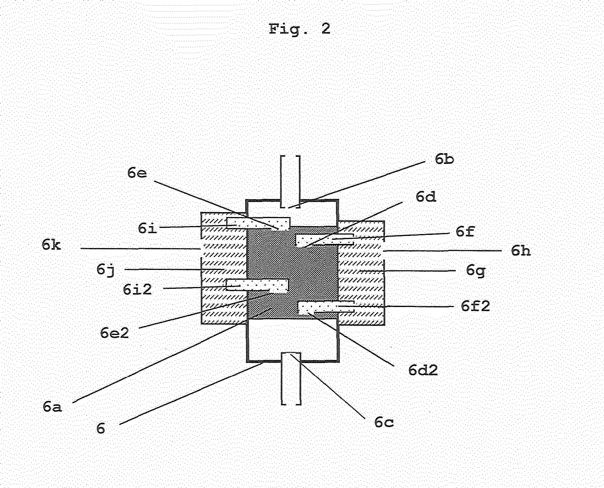

In Fig. 2 ist eine schematische Darstellung einer bevorzugten Ausführungsform einer nachgeschalteten Einheit 6 in Form eines Gegenstromvorerhitzers mit zweitem Behandlungsraum 6a gemäss der vorliegenden Erfindung gezeigt, wie er beispielsweise in Scheirs/Long (Hrsg.), Modern Polyesters, Wiley 2003, S. 170, beschrieben ist.

Auch diese bevorzugte Ausführungsform einer nachgeschalteten Einheit 6 mit zweitem Behandlungsraum 6a weist eine Eintragsöffnung 6b und eine Austragsöffnung 6c für das Polykondensatgranulat auf, wie vorstehend zu Fig. 1 beschrieben.

Diese bevorzugte Ausführungsform einer nachgeschalteten Einheit 6 mit zweitem Behandlungsraum 6a weist eine Zuführeinrichtung 6f und eine Wegführeinrichtung 6i für das Prozessgas auf.

Diese besondere Ausführungsform ist dadurch gekennzeichnet, dass sich die Eintrittsöffnung 6d in einer Zuführeinrichtung 6f befindet. Vor der Zuführeinrichtung 6f befindet sich ein Verteilraum 6g, durch den Prozessgas zu der Zuführeinrichtung 6f geführt wird. Es können mehrere Zuführeinrichtungen 6f mit entsprechenden Eintrittsöffnungen 6d vorhanden sein.

In diesen Verteilraum 6g mündet zumindest eine Zuführöffnung 6h für Prozessgas.

Diese besondere Ausführungsform ist weiterhin dadurch gekennzeichnet, dass sich die Austrittsöffnung 6e in einer Wegführeinrichtung 6i befindet. Es können mehrere Wegführeinrichtungen 6i mit entsprechenden Austrittsöffnungen 6e vorhanden sein. Nach den Wegführeinrichtungen 6i befindet sich ein Sammelraum 6j, in dem Prozessgas aus den Wegführeinrichtungen 6i gesammelt wird. In diesen Sammelraum 6j mündet zumindest eine Wegführöffnung 6k für Prozessgas.

Weiterhin können Vorrichtungen zur Verteilung des Prozessgases, wie Staubleche, Ventile oder Klappen, wie auch getrennte Kanäle zur individuellen Prozessgaszufuhr und -Wegfuhr angeordnet sein. In oder unterhalb der Wegführeinrichtung 6i können sich Vorrichtungen befinden, die den Durchtritt von Prozessgas erlauben, den Durchtritt von Granulaten aber behindern. Dies kann zum Beispiel durch einen gebogenen oder umgelenkten Durchflusskanal oder mit Hilfe von ablenkenden Einbauten, wie zum Beispiel einem Zick-Zack-Abscheider, erfolgen.

Vorzugsweise befinden sich auf einer Ebene eine Vielzahl von dächerförmigen oder rohrförmigen Zuführeinrichtungen 6f, in die aus einem Verteilraum 6g kommendes Prozessgas fliesst, und oberhalb dieser Ebene auf einer weiteren Ebene eine Vielzahl von dächerförmigen oder rohrförmigen Wegführeinrichtungen 6i, durch die Prozessgas in einen Sammelraum 6j fliesst, wobei das Prozessgas von der unteren Ebene zur oberen Ebene strömt und dabei das Schüttgut, das den zweiten Behandlungsraum 6a von oben nach unten durchfliesst, im Gegenstrom durchströmt.

Die Zuführeinrichtungen 6f und die Wegführeinrichtungen 6i sind dazu derart angeordnet, dass ein direkter Gasfluss vom Verteilraum 6g zum Sammelraum 6j vermieden wird.

Weiterhin ist die bevorzugte Ausführungsform gemäss Fig. 2 dadurch gekennzeichnet, dass unterhalb und zusätzlich zur zumindest einen Zuführeinrichtung 6f und Wegführeinrichtung 6i für Prozessgas zumindest eine weitere Zuführeinrichtung 6f2 und Wegführeinrichtung 6i2 für Prozessgas in den zweiten Behandlungsraum 6a mündet. Die Eintrittsöffnung 6d2 befindet sich in der Zuführeinrichtung 6f2. Die Zuführeinrichtung 6f2 mündet ebenfalls in den Verteilraum 6g, durch den Prozessgas zu der Zuführeinrichtung 6f2 geführt wird.

Die Eintrittsöffnung 6e2 befindet sich in der Wegführeinrichtung 6i2. Die Wegführeinrichtung 6i2 mündet ebenfalls in den Sammelraum 6j.

Die zumindest eine weitere Zuführeinrichtung 6f2 und Wegführeinrichtung 6i2 sind derart angeordnet, dass die Polykondensatgranulate nach Durchlaufen eines Bereiches des zweiten Behandlungsraumes 6a, in dem es einem Gasfluss aus der zumindest einen Zuführeinrichtung 6f ausgesetzt war, dem Gasfluss aus der zumindest einen zusätzlichen Zuführeinrichtung 6f2 ausgesetzt wird. Dadurch lässt sich eine mehrstufige Wärmezufuhr erreichen.

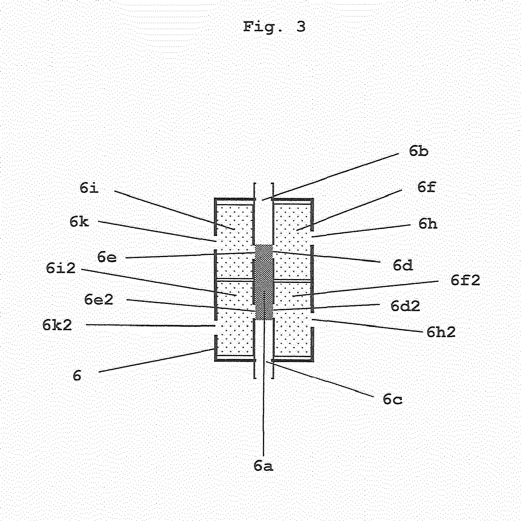

In Fig. 3 ist eine schematische Darstellung einer weiteren bevorzugten Ausführungsform einer nachgeschalteten Einheit 6 mit zweitem Behandlungsraum 6a gemäss der vorliegenden Erfindung gezeigt.

Der zweite Behandlungsraum 6a ist im Wesentlichen ein vertikal ausgerichteter Schlitz in einem runden, zylinderförmigen Mantel der nachgeschalteten Einheit 6.

Auch diese bevorzugte Ausführungsform einer nachgeschalteten Einheit 6 mit zweitem Behandlungsraum 6a weist eine Eintragsöffnung 6b und eine Austragsöffnung 6c für die Polykondensatgranulate auf, wie vorstehend zu Fig. 1 und 2 beschrieben.

Auch diese bevorzugte Ausführungsform einer nachgeschalteten Einheit 6 mit zweitem Behandlungsraum 6a weist eine Zuführeinrichtung 6f und eine Wegführeinrichtung 6i für das Prozessgas auf.

Die besondere Ausführungsform gemäss Fig. 3 ist dadurch gekennzeichnet, dass sich die Eintrittsöffnung 6d in einer Zuführeinrichtung 6f befindet. Bevorzugt ist die Zuführeinrichtung 6f mit einer Vielzahl von Eintrittsöffnungen 6d versehen, wobei die Eintrittsöffnungen 6d derart gewählt werden, dass sie von Prozessgas, jedoch nicht von Granulaten durchströmt werden können. Eine bevorzugte Ausführungsform sieht vor, dass die Zuführeinrichtung 6f ein Lochblech oder ein Spaltsieb umfasst, in dem die Eintrittsöffnungen 6d angeordnet sind.

In die Zuführeinrichtung 6f mündet zumindest eine Zuführöffnung 6h für Prozessgas.

Diese besondere Ausführungsform ist weiterhin dadurch gekennzeichnet, dass sich die Austrittsöffnung 6e in einer Wegführeinrichtung 6i befindet. Bevorzugt ist die Wegführeinrichtung 6i mit einer Vielzahl von Austrittsöffnungen 6e versehen, wobei die Austrittsöffnungen 6e derart gewählt werden, dass sie von Prozessgas, jedoch nicht von Granulaten durchströmt werden können.

Eine bevorzugte Ausführungsform sieht vor, dass die Wegführeinrichtung 6i ein Lochblech oder ein Spaltsieb umfasst, in dem die Austrittsöffnungen 6e angeordnet sind.

In die Wegführeinrichtung 6i mündet zumindest eine Wegführöffnung 6k für Prozessgas.

Weiterhin können Vorrichtungen zur Verteilung des Prozessgases, wie Staubleche, Ventile oder Klappen, wie auch getrennte Kanäle zur individuellen Prozessgaszufuhr und -Wegfuhr angeordnet sein.

Vorzugsweise befinden sich die Zuführeinrichtungen 6f und die Wegführeinrichtungen 6i im Wesentlichen auf der gleichen Ebene, wobei das Prozessgas von der Zuführeinrichtung 6f zur Wegführeinrichtung 6i strömt und dabei das Schüttgut, das den zweiten Behandlungsraum 6a von oben nach unten durchfliesst, im Kreuzstrom durchströmt.

Weiterhin ist die bevorzugte Ausführungsform gemäss Fig. 3 dadurch gekennzeichnet, dass unterhalb und zusätzlich zur zumindest einen Zuführeinrichtung 6f und Wegführeinrichtung 6i für Prozessgas zumindest eine weitere Zuführeinrichtung 6f2 und Wegführeinrichtung 6i2 für Prozessgas in den zweiten Behandlungsraum 6a mündet. Die zumindest eine weitere Zuführeinrichtung 6f2 und Wegführeinrichtung 6i2 sind derart angeordnet, dass die Polykondensatgranulate nach Durchlaufen eines Bereiches des zweiten Behandlungsraumes 6a, in dem es einem Gasfluss aus der zumindest einen Zuführeinrichtung 6f ausgesetzt war, dem Gasfluss aus der zumindest einen zusätzlichen Zuführeinrichtung 6f2 ausgesetzt wird. Dadurch lässt sich eine mehrstufige Wärmezufuhr erreichen.

Die vorliegende erfindungsgemässe Vorrichtung kann vorteilhaft zur kontinuierlichen Granulation und Kristallisation eines Polymers, insbesondere eines Polykondensats, vorzugsweise eines Polyesters wie Polyethylenterephthalat verwendet werden.

Der Zusammenhang zwischen Gastemperatur und Gas- zu Produktmengenverhältnis zur Produkttemperatur lässt sich durch folgende nicht einschränkende Beispiele verdeutlichen:

Vergleichsbeispiel 1

In einem runden, zylindrischen Behandlungsraum mit 1.9 m Durchmesser und 1.2 m vertikalem Abstand zwischen Gaseintritt und -austritt wurden 10 t/h PET Granulat mit einer Ausgangskristallinität von 2.5% und einer Eingangstemperatur von $T_{GR}$ = 140°C behandelt.

Wurden 3000 kg/h (X = 0.3) an Stickstoff mit $T_{Gas}$ = 220°C im Gegenstrom zugefügt, erfolgte eine Erwärmung auf $T_{PH}$ = 171°C und eine Erhöhung der Kristallinität auf 32.5%, was einer Temperaturerhöhung durch die Kristallisation $T_{KR}$ = 18.7°C entspricht. Für die Kristallisationswärme q wird 115 J/g für 100% Kristallinität, und für die Wärmekapazität c wird 1.84 J/g/K eingesetzt.

$T_{Gas}$ ist somit 61.3°C höher als $T_{GR}+T_{KR}$, und X* $(T_{Gas}-T_{GR}-T_{KR})$ liegt bei 18.4°C, und $T_{PH}$ ist um 12.3°C grösser als $T_{GR}+T_{KR}$.

Die Gasgeschwindigkeit am Gasaustritt betrug 0.36 m/s, wodurch Festbettbedingungen vorlagen. Es ergab sich ein Druckabfall von 34 mbar. Die Verweilzeit der Granulate im Behandlungsraum betrug 16.3 Minuten.

### Vergleichsbeispiel 2

Wurde die Gasmenge in Vergleichsbeispiel 1 auf 6000 kg/h (X = 0.6) erhöht, erfolgte eine Erwärmung auf $T_{PH}$ = 181.2°C. Die Kristallinitätszunahme und somit $T_{KR}$ bleiben unverändert.

$T_{Gas}$ bleibt 61.3°C höher als $T_{GR}+T_{KR}$, und X* ($T_{Gas}$-$T_{GR}$-$T_{KR}$) liegt bei 36.8°C, und $T_{PH}$ ist um 24.2°C grösser als $T_{GR}+T_{KR}$.

Die Gasgeschwindigkeit am Gasaustritt betrug 0.73 m/s, wodurch immer noch Festbettbedingungen vorlagen. Es ergab sich ein Druckabfall von 66mbar.

Dieses Vergleichsbeispiel zeigt die bessere Aufheizung bei höherer Gasmenge im Festbett.

### Vergleichsbeispiel 3

Wurde die Gasmenge in Vergleichsbeispiel 1 auf 8000 kg/h (X = 0.8) erhöht, ergab sich eine Gasgeschwindigkeit am Gasaustritt von >1 m/s, wodurch örtliche Wirbelbettbedingungen entstanden. Es erfolgte nur noch eine Erwärmung auf $T_{PH}$ = 178.8°C.

Es ergab sich ein Druckabfall von 75 mbar.

Dieses Vergleichsbeispiel zeigt die schlechtere Aufheizung trotz höherer Gasmenge, sowie den höheren Druckabfall, wenn die Aufheizung nicht mehr unter Festbettbedingungen erfolgt.

### Beispiel 1

Wurde der Behandlungsraum aus Beispiel 1 in 4 Zonen von 0.3 m Höhe aufgeteilt und das Produkt in jeder Zone mit einer Gasmenge von 6000 kg/h (X total = 2.4) behandelt, erfolgte eine Erwärmung auf $T_{PH}$ = 206°C.

Bei unverändertem $T_{KR}$ liegt X* ($T_{Gas}$-$T_{GR}$-$T_{KR}$) bei 166°C, und $T_{PH}$ ist um 47.3°C grösser als $T_{GR}+T_{KR}$.

Die durchschnittliche Gasgeschwindigkeit am Gasaustritt betrug 0.79 m/s, wodurch immer noch Festbettbedingungen vorlagen. Es ergab sich ein Druckabfall von 71 mbar.

Dieses Beispiel zeigt die bessere Aufheizung bei mehrstufiger Fahrweise.

### Vergleichsbeispiel 4

Wurde der zweite Behandlungsraum in einem einfachen Kristallisationsbehälter bereitgestellt, musste dazu zur ausreichenden Produkt- und Gasverteilung zumindest ein H/D Verhältnis von 2 eingehalten werden. Bei einer Verweilzeit von 7.5 Minuten ergab sich somit bei einem Durchsatz von 10 t/h ein Kristallisationsbehälter mit 1 m Durchmesser und 2m Höhe. Das PET-Granulat mit einer Ausgangskristallinität von 2.5% wurde mit einer Eingangstemperatur von $T_{GR}$ = 140°C behandelt.

Wurden 1800 kg/h (X = 0.18) an Stickstoff mit $T_{Gas}$ = 220°C im Gegenstrom zugefügt, erfolgte eine Erwärmung auf $T_{PH}$ = 162°C und eine Erhöhung der Kristallinität auf 25.3%, was einer Temperaturerhöhung durch die Kristallisation $T_{KR}$ = 14.2°C entspricht.

$T_{Gas}$ ist somit 65.8°C höher als $T_{GR}+T_{KR}$, und X* ($T_{Gas}$-$T_{GR}$-$T_{KR}$) liegt bei 11.8°C, und $T_{PH}$ ist um 7.8°C grösser als $T_{GR}+T_{KR}$.

Die Gasgeschwindigkeit am Gasaustritt betrug 0.78 m/s, wodurch immer noch Festbettbedingungen vorlagen. Es ergab sich jedoch ein Druckabfall von 112 mbar.

Dieses Beispiel zeigt die schlechtere Aufheizung in einem konventionellen Kristallisationsbehälter bei gleichzeitig hohem Druckabfall. Eine deutlich höhere Gasmenge kann nicht verwendet werden, da sonst keine Festbettbedingungen mehr vorliegen.

### Vergleichsbeispiel 5

Wurde Vergleichsbeispiel 4 mit 50 t/h Produktdurchsatz durchgeführt, ergab sich bei einer Verweilzeit von 8 Minuten ein Kristallisationsbehälter mit 1.75 m Durchmesser und 3.5 m Höhe. Wurden 5500 kg/h (X = 0.11) an Stickstoff mit $T_{Gas}$ = 220°C im Gegenstrom zugefügt, erfolgt eine Erwärmung auf $T_{PH}$ = 159.4°C und eine Erhöhung der Kristallinität auf 25.9%, was einer Temperaturerhöhung durch die Kristallisation $T_{KR}$ = 14.6°C entspricht.

$T_{Gas}$ ist somit 65.4°C höher als $T_{GR}+T_{KR}$, und X* ($T_{Gas}$-$T_{GR}$-$T_{KR}$) liegt bei 7.2°C, und $T_{PH}$ ist um 4.8°C grösser als $T_{GR}+T_{KR}$.

Die Gasgeschwindigkeit am Gasaustritt betrug 0.77m/s, wodurch immer noch Festbettbedingungen vorlagen. Es ergab sich jedoch ein Druckabfall von 188 mbar.

Dieses Vergleichsbeispiel zeigt, wie sich die Situation mit zunehmendem Durchsatz mit einem konventionellen Kristallisationsbehälter verschlechtert.

### Patentansprüche

1. Verfahren zur kontinuierlichen Herstellung eines teilkristallinen Granulats aus Polyethylenterephthalat-Homopolymer oder -Copolymer, umfassend die Schritte:

    a) Formen einer Schmelze aus Polyethylenterephthalat-Homopolymer oder -Copolymer zu Granulat unter Zugabe eines flüssigen Kühlmediums, und Abkühlen auf eine mittlere Granulat-Temperatur innerhalb des Kristallisationstemperaturbereiches des Polyethylenterephthalat-Homopolymers oder -Copolymers, wobei das Abkühlen vor oder während oder nach dem Formen zu Granulat erfolgt;

    b) Abtrennen des flüssigen Kühlmediums vom Granulat in einem ersten Behandlungsraum (4a), wobei das Granulat nach Austritt aus dem ersten Behandlungsraum (4a) eine Temperatur $T_{GR}$ und einen Kristallisationsgrad von weniger als 10% aufweist;

c) Kristallisieren des Granulats in einem zweiten Behandlungsraum (6a),

**dadurch gekennzeichnet, dass**

im zweiten Behandlungsraum (6a) Bedingungen eines Festbetts vorliegen und das Granulat im zweiten Behandlungsraum (6a) durch Energiezufuhr von aussen mittels eines Prozessgases erhitzt wird, wobei das Prozessgas eine Temperatur $T_{Gas}$ aufweist, die grösser ist als die Summe der Granulattemperatur $T_{GR}$ und der durch freigesetzte Kristallisationswärme im zweiten Behandlungsraum (6a) auftretenden Temperaturerhöhung $T_{KR}$, d.h. $T_{Gas} > (T_{GR} + T_{KR})$, und wobei das Granulat am Austritt aus dem zweiten Behandlungsraum (6a) eine mittlere Temperatur $T_{PH}$ aufweist, die um 10 bis 90°C grösser ist als die Summe der Granulattemperatur $T_{GR}$ und der durch freigesetzte Kristallisationswärme im zweiten Behandlungsraum (6a) auftretenden Temperaturerhöhung $T_{KR}$, d.h. $(T_{GR} + T_{KR} + 90°C) \geq T_{PH} \geq (T_{GR} + T_{KR} + 10°C)$, wobei die Behandlung im zweiten Behandlungsraum in mehreren Stufen erfolgt, wobei eine Stufe jeweils ein Paar an Zuführeinrichtungen und Wegführeinrichtungen die in einem zugehörigen Sammelraum münden, umfasst und jede Stufe mit einem Verhältnis X der Massenströme von Gas ($m_G$) und Granulat ($m_P$) ($X = m_G/m_P$) von kleiner als 1, besonders bevorzugt kleiner als 0.5 durchgeführt wird.

2. Verfahren nach Anspruch 1, wobei die Trocknung des Granulats im ersten Behandlungsraum (4a) erfolgt und das Granulat nach Austritt aus dem ersten Behandlungsraum (4a) eine Temperatur $T_{GR}$ im Bereich von 100 bis 180°C, vorzugsweise von 120 °C bis 160°C aufweist.

3. Verfahren nach einem der Ansprüche 1 bis 2, **dadurch gekennzeichnet, dass** das flüssige Kühlmedium, vorzugsweise Wasser, eine Temperatur im Bereich von 50°C bis 80°C, bevorzugt im Bereich von 60°C bis 75°C aufweist.

4. Verfahren nach einem der Ansprüche 1 bis 3, **dadurch gekennzeichnet, dass** das Verhältnis X der Massenströme von Gas ($m_G$) und Granulat ($m_P$) ($X = m_G/m_P$) im zweiten Behandlungsraum (6a) so eingestellt wird, dass $4°C \leq (T_{Gas} - T_{KR} - T_{GR}) * X \leq 400°C$, vorzugsweise $15°C < (T_{Gas} - T_{KR} - T_{GR}) * X \leq 300°C$, bevorzugter $15°C < (T_{Gas} - T_{KR} - T_{GR}) * X \leq 250°C$, besonders bevorzugt $90°C < (T_{Gas} - T_{KR} - T_{GR}) * X \leq 300°C$, und insbesondere bevorzugt $90°C < (T_{Gas} - T_{KR} - T_{GR}) * X \leq 250°C$ ist.

5. Verfahren nach einem der Ansprüche 1 bis 4, **dadurch gekennzeichnet, dass** der zweite Behandlungsraum (6a) im Gegenstrom oder alternativ im Kreuzstrom oder einer Kombination von Gegenstrom und Kreuzstrom von einem Prozessgas durchströmt wird.

6. Verfahren nach einem der Ansprüche 1 bis 5, **dadurch gekennzeichnet, dass** die Behandlung im zweiten Behandlungsraum (6a) in 2 bis 8 Stufen, besonders bevorzugt 2 bis 5 Stufen, erfolgt, wobei eine Stufe jeweils alle Zuführeinrichtungen (6f, 6f2) die von einen Verteilraum (6g) ausgehen und alle Wegführeinrichtungen (6i, 6i2) die in einem zugehörigen Sammelraum (6j) münden, umfasst.

7. Verfahren nach einem der Ansprüche 1 bis 6, **dadurch gekennzeichnet, dass** im zweiten Behandlungsraum (6a) das Granulat auf die für eine nachfolgende SSP-Reaktion vorgesehene Temperatur erhitzt wird.

8. Verfahren nach einem der Ansprüche 1 bis 7, **dadurch gekennzeichnet, dass** in Schritt a) das Kühlmedium eine Temperatur unterhalb des Glasübergangspunkts (Tg) des Polyethylenterephthalat-Homopolymers oder -Copolymers aufweist.

9. Verfahren nach einem der Ansprüche 1 bis 8, **dadurch gekennzeichnet, dass** das Aufheizen der Granulate aus Polyethylenterephthalat-Homopolymer oder -Copolymer am Austritt aus dem zweiten Behandlungsraum auf $(T_{GR} + T_{KR} + 90°C) \geq T_{PH} \geq (T_{GR} + T_{KR} + 15°C)$ und besonders bevorzugt auf $(T_{GR} + T_{KR} + 90°C) \geq T_{PH} \geq (T_{GR} + T_{KR} + 20°C)$ erfolgt.

10. Vorrichtung zur Durchführung eines Verfahrens gemäss einem der Ansprüche 1 bis 9, umfassend

- eine Granulationsvorrichtung (2) mit einer Leitung zur Zuführung eines Kühlmediums und einer Leitung (3) zur Wegführung eines Granulat/Kühlmedium Gemisches,
- eine stromabwärts von der Granulationsvorrichtung (2) angeordnete Trennvorrichtung (4), welche einen ersten Behandlungsraum (4a) bereitstellt,
- und einer stromabwärts von der Trennvorrichtung (4) ohne dazwischen befindlicher Kristallisationseinheit angeordneten Einheit (6), welche einen zweiten Behandlungsraum (6a) bereitstellt und mit jeweils einer Eintragsöffnung (6b) und einer Austragsöffnung (6c) für das Granulat ausgestattet ist,

**dadurch gekennzeichnet, dass** der zweite Behandlungsraum (6a) mit zumindest zwei Zuführeinrichtungen (6f, 6f2) und zumindest zwei Wegführeinrichtungen (6i, 6i2) für Prozessgas verbunden ist, so dass im zweiten Behandlungsraum (6a) das Gas unter Bedingungen eines Festbetts durch das Granulat geführt werden kann und die Behandlung im zweiten Behandlungsraum (6a) in mehreren Stufen erfolgen kann, wobei eine Stufe jeweils ein Paar an Zuführeinrichtungen 6f, 6f2) und Wegführeinrichtungen (6i, 6i2) umfasst.

11. Vorrichtung nach Anspruch 10, **dadurch gekennzeichnet, dass** die zumindest zwei Zuführeinrichtungen (6f, 6f2) und zumindest zwei Wegführeinrichtungen (6i, 6i2) derart angeordnet sind, dass die Granulate aus Polyethylenterephthalat-Homopolymer oder -Copolymer nach Durchlaufen eines Bereiches des zweiten Behandlungsraumes, in dem es einem Gasfluss aus der zumindest einen Zuführeinrichtung (6f) ausgesetzt werden kann, in einen Bereich des zweiten Behandlungsraumes gelangt, in welchem es einem Gasfluss aus der zumindest einen zusätzlichen Zuführeinrichtung (6f2) ausgesetzt werden kann.

12. Vorrichtung nach Anspruch 10 oder 11, **dadurch gekennzeichnet, dass** die Einheit (6) mit zweitem Behandlungsraum (6a) ein Vorerhitzer ist.

13. Vorrichtung nach einem der Ansprüche 10 bis 12, **dadurch gekennzeichnet, dass** der zweite Behandlungsraums (6a) unterhalb des ersten Behandlungsraums (4a) angeordnet ist.

**Claims**

1. A process for the continuous preparation of semi-crystalline pellets of polyethylene terephthalate homopolymer or copolymer, comprising the steps:

   (a) forming a melt of polyethylene terephthalate homopolymer or copolymer into pellets by addition of a liquid cooling medium, and cooling to an average pellet temperature within the crystallization temperature range of the polyethylene terephthalate homopolymer or copolymer, wherein the cooling occurs before or during or after the forming into pellets;
   b) separating the liquid cooling medium from the pellets in a first treatment chamber (4a), wherein the pellets have a temperature $T_{GR}$ and a degree of crystallization of less than 10% after leaving the first treatment chamber (4a) ;
   c) Crystallization of the pellets in a second treatment chamber (6a),

   **characterized in that**
   fixed bed conditions are present in the second treatment chamber (6a) and the pellets are heated in the second treatment chamber (6a) by the supply of energy from outside by means of a process gas, the process gas having a temperature $T_{Gas}$ which is higher than the sum of the pellet temperature $T_{GR}$ and the temperature increase $T_{KR}$ occurring in the second treatment chamber (6a) as a result of released heat of crystallization, i.e. $T_{Gas} > (T_{GR} + T_{KR})$, and wherein the pellets at the exit from the second treatment chamber (6a) have an average temperature $T_{PH}$ which is higher by 10 to 90°C than the sum of the pellet temperature $T_{GR}$ and the temperature increase $T_{KR}$ occurring due to released heat of crystallization in the second treatment chamber (6a), i.e. $(T_{GR} + T_{KR} + 90°C) \geq T_{PH} \geq (T_{GR} + T_{KR} + 10°C)$, wherein the treatment in the second treatment chamber is carried out in several stages, each stage comprising a pair of feed means and discharge means, which open into an associated collecting space, and each stage being carried out with a ratio X of the mass flows of gas ($m_G$) and pellets ($m_P$) ($X = m_G /m_P$) of less than 1, particularly preferably less than 0.5.

2. The process according to claim 1, wherein the drying of the pellets takes place in the first treatment chamber (4a) and the pellets, after leaving the first treatment chamber (4a), have a temperature $T_{GR}$ in the range from 100 to 180°C, preferably from 120°C to 160°C.

3. The process according to any one of claims 1 to 2, **characterized in that** the liquid cooling medium, preferably water, has a temperature in the range from 50°C to 80°C, preferably in the range from 60°C to 75°C.

4. The process according to any one of claims 1 to 3, **characterized in that** the ratio X of the mass flows of gas ($m_G$) and pellets ($m_P$) ($X = m_G /m_P$) in the second treatment chamber (6a) is set such that 4°C $\leq (T_{Gas} - T_{KR} - T_{GR}) * X \leq 400°C$, preferably 15°C < $(T_{Gas} - T_{KR} - T_{GR}) * X \leq 300°C$, more preferably 15°C < $(T_{Gas} - T_{KR} - T_{GR}) * X \leq 250°C$, particularly preferably 90°C < $(T - T - T_{GasKRGR}) * X \leq 300°C$, and especially preferably 90°C < $(T - T_{GaSKR} - T_{GR}) * X \leq 250°C$.

5. The process according to any one of claims 1 to 4, **characterized in that** a process gas flows through the second treatment chamber (6a) in countercurrent or alternatively in crosscurrent or a combination of countercurrent and crosscurrent.

6. The process according to any one of the claims 1 to 5, **characterized in that** the treatment in the second treatment chamber (6a) takes place in 2 to 8 stages, particularly preferably 2 to 5 stages, wherein a stage comprises in each case all feed devices (6f, 6f2) which start from a distribution space (6g) and all discharge devices (6i, 6i2) which open into an associated collecting space (6j).

7. The process according to any one of claims 1 to 6, **characterized in that** in the second treatment chamber (6a) the pellets are heated to the temperature intended for a subsequent SSP reaction.

8. The process according to any one of claims 1 to 7, **characterized in that** in step a) the cooling medium has a temperature below the glass transition point (Tg) of the polyethylene terephthalate homopolymer or copolymer.

9. The process according to any one of claims 1 to 8, **characterized in that** the heating of the pellets of polyethylene terephthalate homopolymer or copolymer at the exit from the second treatment chamber is carried out to $(T + T_{GRKR} + 90°C) \geq T \geq (T_{PH\ GR} + T_{KR} + 15°C)$ and particularly preferably to $(T + T_{GRKR} + 90°C) \geq T_{PH} \geq (T_{GR} + T_{KR} + 20°C)$.

10. An apparatus for carrying out a process according to any one of claims 1 to 9, comprising

    - a pelletization device (2) with a line for supplying a cooling medium and a line (3) for carrying away a pellet/cooling medium mixture,
    - a separation device (4) arranged downstream of the pelletization device (2), which provides a first treatment space (4a),
    - and a unit (6) arranged downstream of the separation device (4) without an intermediate crystallization unit, which unit (6) provides a second treatment chamber (6a) and is equipped with a feed opening (6b) and a discharge opening (6c), respectively, for the pellets,

    **characterized in that** the second treatment chamber (6a) is connected to at least two feed devices (6f, 6f2) and at least two discharge devices (6i, 6i2) for process gas, so that in the second treatment chamber (6a) the gas can be led through the pellets under fixed bed conditions and the treatment in the second treatment chamber (6a) can be carried out in several stages, each stage comprising a pair of feed devices (6f, 6f2) and discharge devices (6i, 6i2).

11. The apparatus according to claim 10, **characterized in that** the at least two feed devices (6f, 6f2) and at least two discharge devices (6i, 6i2) are arranged such that the pellets of polyethylene terephthalate homopolymer or copolymer, after passing through an area of the second treatment space, in which they can be subjected to a gas flow from the at least one feed device (6f), the pellets of polyethylene terephthalate homopolymer or copolymer pass into a region of the second treatment chamber in which they can be subjected to a gas flow from the at least one additional feed device (6f2).

12. The apparatus according to claim 10 or 11, **characterized in that** the unit (6) with second treatment chamber (6a) is a preheater.

13. The apparatus according to any one of claims 10 to 12, **characterized in that** the second treatment chamber (6a) is arranged below the first treatment chamber (4a).

## Revendications

1. Procédé de préparation en continu d'un granulé semi-cristallin d'homopolymère ou de copolymère de polyéthylène téréphtalate, comprenant les étapes suivantes :

    a) moulage d'une masse fondue d'homopolymère ou de copolymère de polyéthylène téréphtalate en granulés par addition d'un milieu de refroidissement liquide, et refroidissement à une température moyenne de granulés dans la plage de températures de cristallisation de l'homopolymère ou du copolymère de polyéthylène téréphtalate, le refroidissement ayant lieu avant ou pendant ou après le moulage en granulés;
    b) la séparation du milieu de refroidissement liquide du granulat dans une première espace de traitement (4a), le granulat présentant, après sa sortie de la première espace de traitement (4a), une température $T_{GR}$ et un degré de cristallisation inférieur à 10% ;
    c) cristallisation des granulés dans un deuxième espace de traitement (6a),

    **caractérisé en ce que**
dans la deuxième espace de traitement (6a), les conditions d'un lit fixe sont présentes et le granulé est chauffé dans la deuxième espace de traitement (6a) par apport d'énergie de l'extérieur au moyen d'un gaz de processus, le gaz de processus présentant une température $T_{Gas}$ qui est supérieure à la somme de la température du granulé $T_{GR}$ et de l'augmentation de température $T_{KR}$ qui se produit dans la deuxième espace de traitement (6a) par la chaleur de cristallisation libérée, c'est-à-dire $T_{Gas} > (T_{GR} + T_{KR})$, et le granulé présentant à la sortie de la deuxième espace de traitement (6a) une température moyenne $T_{PH}$ qui est supérieure de 10 à 90°C à la somme de la température du granulé $T_{GR}$ et de l'augmentation de température $T_{KR}$ produite par la chaleur de cristallisation libérée dans la deuxième espace de traitement (6a), c'est-à-dire $(T_{GR} + T_{KR} +$

90°C) $\geq T_{PH} \geq (T_{GR} + T_{KR} + 10°C)$, le traitement dans le deuxième espace de traitement étant effectué en plusieurs étapes, une étape comprenant chacune une paire de dispositifs d'alimentation et de dispositifs d'évacuation, qui débouchent dans un espace de collecte associé, et chaque étape est effectué avec un rapport X des débits massiques de gaz ($m_G$) et de granulés ($m_P$) (X - $m_G$ /$m_P$) inférieur à 1, de préférence inférieur à 0.5.

2. Procédé selon la revendication 1, dans lequel le séchage des granulés est effectué dans la première espace de traitement (4a) et les granulés présentent, après leur sortie de la première espace de traitement (4a), une température $T_{GR}$ comprise entre 100 et 180°C, de préférence entre 120°C et 160°C.

3. Procédé selon l'une des revendications 1 à 2, **caractérisé en ce que** le milieu liquide de refroidissement, de préférence de l'eau, a une température comprise entre 50°C et 80°C, de préférence entre 60°C et 75°C.

4. Procédé selon l'une des revendications 1 à 3, **caractérisé en ce que** le rapport X des débits massiques de gaz ($m_G$) et de granulés ($m_P$) (X = $m_G$ /$m_P$) dans la deuxième espace de traitement (6a) est ajusté de manière à ce que $4°C \leq (T_{Gas} - T_{KR} - T_{GR})$ * $X \leq 400°C$, de préférence $15°C < (T_{Gas} - T_{KR} - T_{GR})$ * $X \leq 300°C$, plus préférentiellement $15°C < (T_{Gas} - T_{KR} - T_{GR})$ * $X \leq 250°C$, plus préférentiellement $90°C < (T_{Gas} - T_{KR} - T_{GR})$ * $X \leq 300°C$, et plus préférentiellement $90°C < (T_{Gas} - T_{KR} - T_{GR})$ * $X \leq 250°C$.

5. Procédé selon l'une des revendications 1 à 4, **caractérisé en ce que** la deuxième espace de traitement (6a) est traversée par un gaz de traitement à contre-courant ou alternativement à courant croisé ou une combinaison de contre-courant et de courant croisé.

6. Procédé selon l'une des revendications 1 à 5, **caractérisé en ce que** le traitement dans le deuxième espace de traitement (6a) est effectué en 2 à 8 étapes, de préférence en 2 à 5 étapes, une étape comprenant respectivement tous les dispositifs d'alimentation (6f, 6f2) qui partent d'un espace de distribution (6g) et tous les dispositifs d'évacuation (6i, 6i2) qui débouchent dans un espace de collecte (6j) associé.

7. Procédé selon l'une des revendications 1 à 6, **caractérisé en ce que**, dans la deuxième espace de traitement (6a), le granulé est chauffé à la température prévue pour une réaction SSP ultérieure.

8. Procédé selon l'une des revendications 1 à 7, **caractérisé en ce que**, à l'étape a), le milieu de refroidissement est à une température inférieure au point de transition vitreuse (Tg) de l'homopolymère ou du copolymère de polyéthylène téréphtalate.

9. Procédé selon l'une des revendications 1 à 8, **caractérisé en ce que** le chauffage des granulés d'homopolymère ou de copolymère de polyéthylène téréphtalate est effectué à la sortie de la deuxième espace de traitement à $(T_{GR} + T_{KR} + 90°C) \geq T_{PH} \geq (T_{GR} + T_{KR} + 15°C)$ et plus préférentiellement à $(T_{GR} + T_{KR} + 90°C) \geq T_{PH} \geq (T_{GR} + T_{KR} + 20°C)$.

10. Dispositif pour la mise en oeuvre d'un procédé selon l'une des revendications 1 à 9, comprenant

   - un dispositif de granulation (2) avec une conduite pour l'amenée d'un milieu de refroidissement et une conduite (3) pour l'évacuation d'un mélange de granulés et de milieu de refroidissement,
   - un dispositif de séparation (4) disposé en aval du dispositif de granulation (2), qui fournit un premier espace de traitement (4a),
   - et une unité (6) disposée en aval du dispositif de séparation (4) sans unité de cristallisation intercalée, qui fournit un deuxième espace de traitement (6a) et qui est équipée respectivement d'une ouverture d'alimentation (6b) et d'une ouverture d'évacuation (6c) pour les granulés,

   **caractérisé en ce que** le deuxième espace de traitement (6a) est relié à au moins deux dispositifs d'alimentation (6f, 6f2) et à au moins deux dispositifs d'évacuation (6i, 6i2) pour le gaz de traitement, de sorte que dans le deuxième espace de traitement (6a), le gaz peut être guidé à travers les granulés dans des conditions de lit fixe et le traitement dans le deuxième espace de traitement (6a) peut être effectué en plusieurs étapes, une étape comprenant respectivement une paire de dispositifs d'alimentation (6f, 6f2) et de dispositifs d'évacuation (6i, 6i2).

11. Dispositif selon la revendication 10, **caractérisé en ce que** lesdits au moins deux dispositifs d'alimentation (6f, 6f2) et lesdits au moins deux dispositifs d'évacuation (6i, 6i2) sont agencés de telle sorte que les granulés d'homopolymère ou de copolymère de polyéthylène téréphtalate, après avoir traversé une zone de la deuxième espace de traitement, dans laquelle il peut être exposé à un flux de gaz provenant dudit au moins un dispositif d'alimentation (6f), passe dans une zone de la deuxième espace de traitement dans laquelle il peut être exposé à un flux de gaz provenant dudit au moins un dispositif d'alimentation supplémentaire (6f2).

12. Dispositif selon la revendication 10 ou 11, **caractérisé en ce que** l'unité (6) avec deuxième espace de traitement (6a) est un préchauffeur.

**13.** Dispositif selon l'une des revendications 10 à 12, **caractérisé en ce que** la deuxième espace de traitement (6a) est disposée en dessous de la première espace de traitement (4a) .

Fig. 1

Fig. 2

Fig. 3

**IN DER BESCHREIBUNG AUFGEFÜHRTE DOKUMENTE**

**In der Beschreibung aufgeführte Patentdokumente**

- DE 10349016
- DE 102004015515
- WO 2006128408 A
- DE 102007040135 A1
- US 3544525 A
- WO 2008071023 A
- EP 3363841 A1
- DE 4300913 A1
- EP 0541674 A
- WO 2008071278 A
- WO 9918404 A1

**In der Beschreibung aufgeführte Nicht-Patentliteratur**

- Modern Polyesters. Wiley, 143
- Modern Polyesters. Wiley, 2003, vol. 4, 158-164
- Modern Polyesters. Wiley, 2003
- Modern Polyesters. Wiley, 2003, 170